Europäisches Patentamt

(19) European Patent Office

Office européen des brevets

(11) EP 0 654 392 B1

(12) EUROPEAN PATENT SPECIFICATION

(45) Date of publication and mention
of the grant of the patent:
**04.03.1998 Bulletin 1998/10**

(51) Int. Cl.⁶: **B62D 6/00**, B62D 5/00
// B62D113:00, B62D137:00

(21) Application number: **94118443.4**

(22) Date of filing: **23.11.1994**

(54) **Steering apparatus for vehicle**

Lenkeinrichtung für ein Fahrzeug

Dispositif de direction pour véhicule

(84) Designated Contracting States:
**DE FR GB IT**

(30) Priority: **24.11.1993 JP 293646/93**
**27.10.1994 JP 264233/94**

(43) Date of publication of application:
**24.05.1995 Bulletin 1995/21**

(73) Proprietor: **KOYO SEIKO CO., LTD.**
**Chuo-ku Osaka 542 (JP)**

(72) Inventors:
• **Nishizaki, Katsutoshi**
**Chuo-ku, Osaka 542 (JP)**
• **Nakano, Shiro**
**Chuo-ku, Osaka 542 (JP)**
• **Shimizu, Yoshinobu**
**Chuo-ku, Osaka 542 (JP)**
• **Goto, Yoshihiro**
**Chuo-ku, Osaka 542 (JP)**
• **Obata, Yoshifumi**
**Chuo-ku, Osaka 542 (JP)**
• **Sentoku, Minoru**
**Chuo-ku, Osaka 542 (JP)**
• **Kada, Tomoyasu**
**Chuo-ku, Osaka 542 (JP)**
• **Matsushita, Shigehisa**
**Chuo-ku, Osaka 542 (JP)**

(74) Representative:
**Popp, Eugen, Dr. et al**
**MEISSNER, BOLTE & PARTNER**
**Postfach 86 06 24**
**81633 München (DE)**

(56) References cited:
EP-A- 0 556 082          DE-A- 4 302 527
GB-A- 2 183 573

• PATENT ABSTRACTS OF JAPAN vol. 016 no. 177
(M-1241) ,28 April 1992 & JP-A-04 019274
(MAZDA MOTOR CORP) 23 January 1992, & JP-
A-04 019 274
• PATENT ABSTRACTS OF JAPAN vol. 017 no. 397
(M-1452) ,26 July 1993 & JP-A-05 077627
(MAZDA MOTOR CORP) 30 March 1993,
• PATENT ABSTRACTS OF JAPAN vol. 012 no. 097
(P-682) ,30 March 1988 & JP-A-62 231190
(YAMAHA MOTOR CO LTD) 9 October 1987, &
JP-A-62 231 190

## Description

### FIELD OF THE INVENTION

The present invention relates to a steering apparatus for use in a vehicle adapted to steer through the operation of a steering wheel. Such steering apparatus is known from GB-A-2 183 573.

### DESCRIPTION OF RELATED ART

Recently, most vehicles are equipped with power assist device for assisting in operating the steering wheels thereof. Such a device allows a driver to operate the steering wheel with a small steering force and hence confers a tremendous benefit on the driver particularly in performing stationary swing or garaging the car. However, vehicles merely featuring a small steering control force may rather turn to be dangerous when running at a high speed. In view of this drawback, vehicles are usually equipped with a steering assist adjusting mechanism for adjusting a steering assist force according to the running speed of thereof so that a smaller steering force is required at a lower running speed and a larger steering control force at a higher running speed.

According to the steering assist adjusting mechanism disclosed in Japanese Unexamined Patent Publication No. 200063/1986, for example, hydraulic pressure is used to press a plunger whose rotation is restricted by an output shaft of the power assist device against an input shaft thereby fixing the input shaft and the output shaft relative to each other, so that a torsion between the both shafts are restricted to reduce the steering assist force to zero ( or to render the steering control force required equal to that required in manual operation.)

Further according to the steering assist adjusting mechanism disclosed in Japanese Unexamined Patent Publication No. 19274/1992, an amount of oil fed to a control valve is adjusted to control the hydraulic pressure in a power cylinder, thereby regulating the steering assist force.

There is provided a vehicle which is adapted to reduce the steering assist force of its power assist device when trying to change the lane during forward running if the vehicle detects some obstacle such as another vehicle in the backward of a lateral side thereof (hereinafter referred to as laterally backward) but the driver steers the vehicle toward the obstacle without becoming aware of it (see, for example, said Japanese Unexamined Patent Publication No. 19274/1992. Such a vehicle is intended to make the driver aware of any dangerous obstacle and to inhibit the driver from steering toward said dangerous obstacle by increasing the steering control force in the aforesaid case, thereby ensuring safety.

When the vehicle is running faster than a certain speed (for example, 15 km/h), however, the steering assist force inherently becomes insignificant. Even if the steering assist force is reduced to zero at such speed, the degree of change in the steering assist force is too small for the driver to notice, which may lead to unassured safety.

Further, the aforesaid mechanism for regulating the steering assist force is not applicable to vehicles which are not equipped with the power assist device, and hence suffers a limited range of application.

### SUMMARY OF THE INVENTION

It is, therefore, an object of the present invention to provide a steering apparatus for a vehicle which is applicable to a wide variety of vehicles and capable of ensuring safety.

To attain this object, the present invention provides a steering apparatus for use in a vehicle adapted to steer through the operation of a steering wheel thereof comprising the subject-matters of claim 1.

The steering apparatus according to the invention is arranged such that if in turning the steering wheel to a predetermined direction, the existence of some obstacle is detected in the turning direction of the steering wheel based on outputs of the obstacle detecting means and steering direction detecting means, the steering reactive force imparting means imparts the steering wheel with a predetermined steering reactive force. The conventional mode to reduce the steering assist force leads to a drawback that even if the steering assist force is reduced to zero when the speed of the vehicle is in a range where the steering assist force inherently becomes insignificant, the degree of such change in the assist force is too small for the driver to notice it. In contrast the present invention makes it possible to obtain a greater steering reactive force than that in manual operation in general by imparting the steering wheel with a predetermined steering reactive force, whereby assuredly making the driver aware of the existence of a dangerous obstacle. In addition, the present invention utilizes the steering reactive force, and hence is widely applicable to vehicles whether equipped with the power assist device or not.

### BRIEF DESCRIPTION OF THE DRAWINGS

In the drawing:

Fig. 1 is a schematic construction view including an essential partial sectional view of a steering apparatus for use in a vehicle according to a first embodiment of the present invention;
Fig. 2 is an enlarged sectional view illustrating an essential part of Fig. 1;
Fig. 3 is a sectional view taken on line X-X of Fig. 1;
Fig. 4 is a sectional view taken on line Y-Y of Fig. 1;
Fig. 5 is a flow chart illustrating the operations of control means;

Fig. 6 is a block diagram illustrating the electric construction of a steering apparatus for use in a vehicle according to the second embodiment of the present invention;

Fig. 7 is a flow chart illustrating the operations of the control means thereof;

Fig. 8 is a schematic construction view including an essential partial sectional view of a steering apparatus for use in a vehicle according to the third embodiment of the present invention;

Fig. 9 is a schematic construction view including an essential sectional view of a power cylinder modifying the third embodiment of the present invention;

Fig. 10 is a schematic construction view illustrating including an essential partial sectional view of a steering apparatus for use in a vehicle according to the fourth embodiment of the present invention;

Fig. 11 is a schematic view showing a modification of the fourth embodiment;

Fig. 12 is a schematic construction view including an essential partial sectional view of a steering apparatus for use in a vehicle according to the fifth embodiment of the present invention;

Fig. 13 is a schematic view showing a modification of the fifth embodiment;

Fig. 14 is a schematic construction view including an essential partial sectional view of a steering apparatus for use in a vehicle according to the sixth embodiment of the present invention;

Fig. 15 is a schematic construction view including an essential partial sectional view of a steering apparatus for use in a vehicle according to the seventh embodiment of the present invention;

Fig. 16 is a flow chart illustrating the operations of the control means of the seventh embodiment;

Fig. 17 is an essential sectional view of a steering apparatus for use in a vehicle according to the eighth embodiment of the present invention, showing an example of inhibition of the movement of a ball nut;

Fig. 18 is an essential sectional view of a steering apparatus for use in a vehicle according to the ninth embodiment of the present invention, showing an example of inhibition of the rotation of a steering shaft;

Fig. 19 is an essential sectional view of a steering apparatus for use in a vehicle according to the tenth embodiment of the present invention, showing an example of inhibition of the rotation of a sector shaft;

Fig. 20 is an essential sectional side elevation of a steering apparatus for use in a vehicle according to the eleventh embodiment of the present invention;

Fig. 21 is a schematic construction view including a sectional view taken on line Z-Z of Fig. 20;

Fig. 22 is a block diagram illustrating the electric construction of a steering apparatus for use in a vehicle according to the twelfth embodiment of the present invention;

Fig. 23 is a schematic view of a vehicle and lane(s) illustrating detection of a running position of the vehicle according to the twelfth embodiment of the present invention;

Fig. 24 is a flow chart illustrating the operations of the control means according to the twelfth embodiment of the present invention; and

Fig. 25 is a flow chart illustrating the flow of control of a steering apparatus for use in a vehicle according to the thirteenth embodiment of the present invention.

DETAILED DESCRIPTION OF THE PREFERRED EMBODIMENTS

With reference to the attached drawings, the following preferred embodiments will be described in detail.

FIRST EMBODIMENT

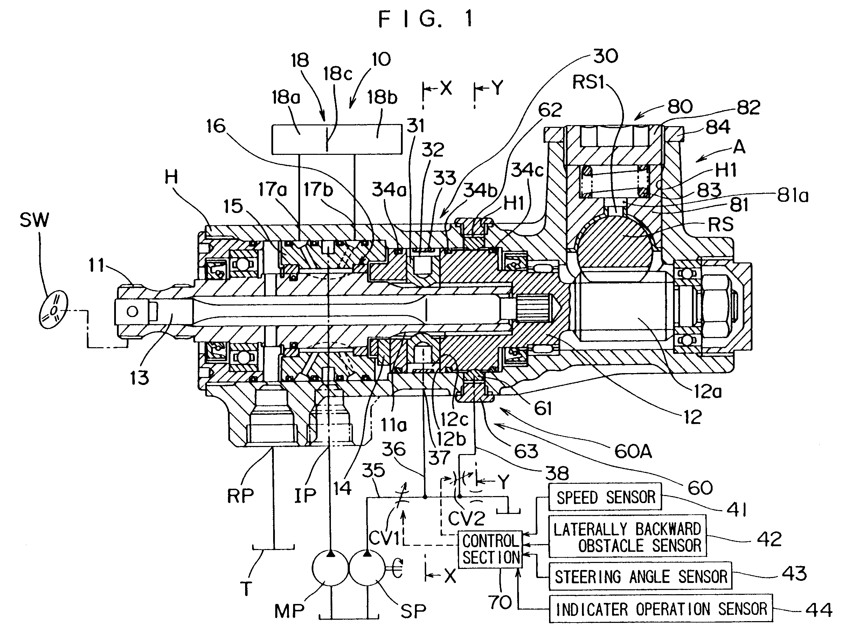

Figures 1 through 5 illustrate the first embodiment of the present invention. Referring to Fig. 1, a steering apparatus A for use in a vehicle according to this embodiment comprises: 1) a hydraulic-type power assist device 10 having a rotary valve-type control valve mechanism, 2) a speed sensor 41 for detecting a running speed of the vehicle, 3) steering assist adjusting mechanism 30 for adjusting a steering assist force of the power assist device 10 in accordance with the running speed of the vehicle, 4) a laterally backward obstacle sensor 42 as a means for detecting an obstacle in the backward of a lateral side of the vehicle, 5) a steering angle sensor 43 for detecting a turning direction of a steering wheel SW, 6) indicator operation sensor 44 as a means for detecting a predetermined operation of a turn indicator, 7) a steering reactive force imparting mechanism 60 for imparting the steering wheel SW with a steering reactive force, and 8) a control section 70 which, when required, causes the steering reactive force imparting mechanism 60 to impart the steering wheel SW with a steering reactive force required depending on a turning direction of the steering wheel detected from a change in the steering angle detected by the steering angle sensor 42 and depending on the existence of the obstacle detected by the laterally backward obstacle sensor 42.

Said laterally backward obstacle sensors 42 are disposed respectively at recesses (not shown) formed near door mirrors in front fenders on both sides of the vehicle. Each of the laterally backward obstacle sensors 42 is of a known construction which is composed by integrating a radar transmitter emitting electric wave laterally backward of the vehicle, a radar receiver for receiving reflected electric wave which is from the radar transmitter and a radar sensor amplifier for amplifying the wave received by the radar receiver ( see, for example, the lower part of page 2 of Japanese Unexamined Patent Publication No. 19274/1992.

The indicator sensor 44 detects the operation of a turn indicator (either for turning to the left or to the right) taken by a driver before turning either to the right or left, or changing the lane. A specific example of such a sensor performs detection based on ON/OFF of a drive circuit of each of the indicator lamps on the both sides of the vehicle.

Said power assist device 10 is of a known construction comprising: 1) an input shaft 11 connected to the steering wheel SW in an integrally rotatable manner, 2) an output shaft 12 connected to the input shaft 11 via a torsion bar 13, 3) a valve body 15 integrally fixed to the output shaft 12 by means of a pin 14, 4) a known rotary valve mechanism 16 formed between the inner periphery of the valve body 15 and the outer periphery of the input shaft 11, 5) a main pump MP which is driven by an engine and is adapted to feed a pressure oil through an in-port IP to the rotary valve mechanism 16, and 6) a power cylinder 18 either of whose oil chambers 18a, 18b is selectively supplied through a cylinder port 17a or 17b with a pressure oil whose pressure is regulated by the rotary valve mechanism 16. The both oil chambers 18a, 18b are separated by a piston 18c.

The input shaft 11 and output shaft 12 are rotatably supported by a housing H. A pinion 12a to be mated with a rack of the rack shaft is formed at an end of the output shaft 12. In this power assist device 10, a relative angular displacement between the input shaft 11 and output shaft 12 is produced by a torsion action of the torsion bar 13, and the pressure oil from a pump P is fed through the in-port IP to the rotary valve mechanism 16 to be selectively introduced into either of the oil chambers 18a, 18b of the power cylinder 18, thereby causing said piston 18c to move axially to supplement the steering force. Fig. 1 is simplified for clarity, but in fact, the power cylinder 18 is disposed in the periphery of the rack shaft RS, and the piston 18c is connected with the rack shaft RS in a manner integrally movable therewith in the axial direction.

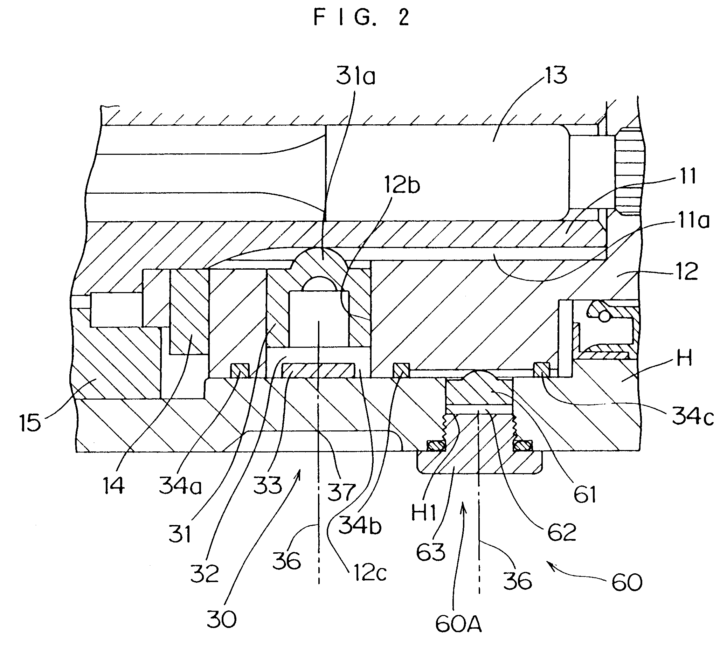

Referring to Fig. 1 and Fig. 2 which is an enlarged view of an essential part of Fig. 1, the steering assist adjusting mechanism 30 includes plungers 31 slidably provided in through holes 12b projected from the output shaft 12 and having spherical heads 31a, and oil chambers 32 into which a pressure oil for bringing the plungers 31 into contact with the input shaft 11 under pressure is introduced. Plurality of the through holes 12b are spaced uniformly on a circumferential groove 12c formed on the outer periphery of the head of the output shaft 12, each of the through holes penetrating the output shaft 12 radially. A ring 33 with slit is fitted with said circumferential groove 12c to restrict said plungers 31 from moving radially outwardly. Said oil chambers 32 are formed between the outer periphery of the head of the output shaft 12 and the inner peripheral wall of the housing H, as sealed by a pair of seal rings 34a, 34b disposed on both sides of the circumferential groove 12c.

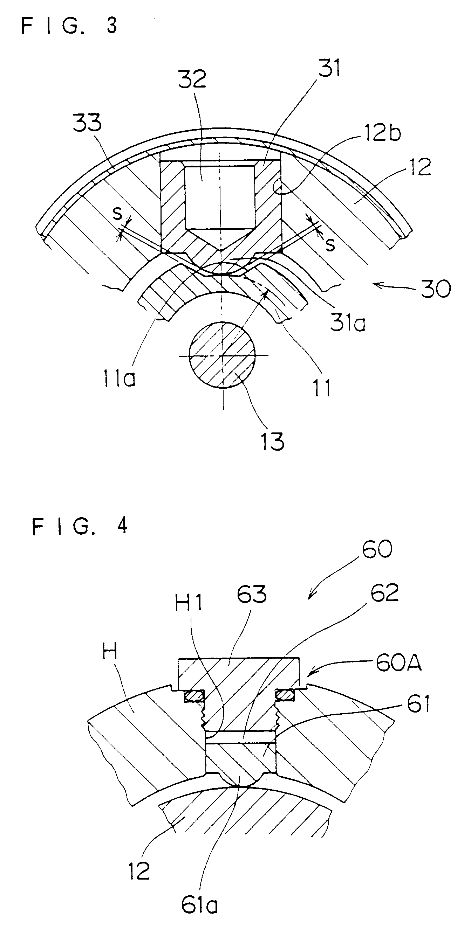

Referring to Fig. 3 which is a sectional view taken on line X-X of Fig. 1, a recessed groove 11a corresponding to each of the plungers 31 extends axially on the outer periphery of the input shaft 11 at an end side thereof. The bottom surface of the recessed groove 11a is in the form of arc having a predetermined radius from the center of the valve, and between the both sides of the groove and the spherical head 31a of the plunger, a gap S is provided equivalent to an amount of displacement of a valve neutral position and a reactive force neutral position (a position where the reactive force of oil pressure does not affect with respect to the relative displacement of the valve) which should be taken into account in view of machining precision.

The oil chamber 32 is supplied with the pressure oil through an in-port 37 and an oil passage 36 branched off from an oil passage 35 extending from an auxiliary pump SP which is driven by an engine. A control valve CV1 with a solenoid whose aperture is adjusted according to signal from the control section 70 is disposed at a portion of the oil passage 35 ahead of where the oil passage 36 is branched off. The oil chamber 32 is supplied with the pressure oil as regulated in accordance with a running speed of the vehicle.

Now with reference to Fig. 1, when the steering wheel is turned to right, the pinion 12 is not readily rotated in response to the rotation of the input shaft 11 because the pinion 12 is meshed with the rack shaft RS unmovable due to steering resistance of the steering wheel. Accordingly, there occurs a torsion displacement of the torsion bar 13, producing a rotary displacement between the input shaft 11 and valve body 15, so that the pressure oil from the main pump MP is fed to the in-port IP, cylinder port 17a and the left oil chamber 18a of the power cylinder 18.

Whereas an oil returned from the right oil chamber 18b of the power cylinder 18 is sent back to a tank T through the cylinder port 17b and a return port RP.

When the vehicle is running, the control section 70, to which a running speed of the vehicle detected by the speed sensor 41 is inputted, controls the control valve CV1 to feed the pressure oil to the oil chambers 32 depending on the running speed of the vehicle thereby bringing the heads of the plungers 31 in contact with the bottoms of the recessed grooves 11a under pressure. In this manner, a steering control force (force required for turning the steering wheel) is adjusted in accordance with the speed of the vehicle.

Referring to Fig. 1 and Fig. 4 which is a sectional view taken on line Y-Y of Fig. 1, said steering reactive force imparting mechanism 60 includes a first relative rotation inhibiting mechanism for inhibiting the relative rotation of the input shaft 11 between the output shaft 12 which is composed of said steering assist adjusting mechanism 30, and a second relative rotation inhibiting mechanism 60A for inhibiting the relative rotation of the housing H b between the output shaft 12. The second relative rotation inhibiting mechanism 60A comprises: 1) plungers 61 slidably provided in through holes H1 projected from the housing H, 2) oil chambers 62 to which the pressure oil for bringing the plungers 61 in contact with the output shaft 12 under pressure is introduced, and 3) screw members for sealing 63 threaded in the entrances of the through holes H1, defining in cooperation with the plungers 61 said oil chambers 62 in the through holes H1, and preventing the plungers 61 from falling off.

Plurality of the through holes H1 are spaced uniformly on the outer periphery of the housing H, each of the through holes penetrating the housing H radially. Said oil chambers 62 are defined between the outer periphery of the output shaft 12 and the inner peripheral wall of the housing H, as sealed by said seal ring 34b and a seal ring 34c.

The oil chamber 62 is supplied with the pressure oil through an oil passage 38 branched off from the oil passage 35 extending from the auxiliary pump SP at a downstream side of where the oil passage 36 is branched off. A control valve CV2 with a solenoid whose aperture is adjusted according to a signal from the control section 70 is disposed on the oil passage 38. The pressure oil is fed to the oil chamber 62 in accordance with the steering direction and the presence of the obstacle.

Referring to Fig. 1, the rack shaft RS is imparted with a pressing force against the pinion 12a side by a pre-load imparting mechanism 80. The pre-load imparting mechanism 80 comprises: 1) a slide member 81 slidably fit in a through hole H1 formed in the housing H and adapted to press the rack shaft RS, 2) a fixed member 82 fixed by screw at the entrance of said through hole H1, 3) a compression coil spring 83 interposed between the slide member 81 and fixed member 82 and urging the slide member 81 toward the rack shaft RS, and 4) a lock nut 84 fit by screw in said fixed member 82 and securing the fixed member 82 to the housing H.

Said slide member 81 has a groove 81a fit with a projection bar RS1 extending axially on the rack shaft RS. The groove 81a allows the projection bar RS1 to move axially along with the movement of the rack shaft RS. Said pre-load imparting mechanism 80 adjusts backlash of a portion where the rack shaft RS and pinion 12a are meshed with, thus eliminating unnecessary play during the operation of the steering wheel.

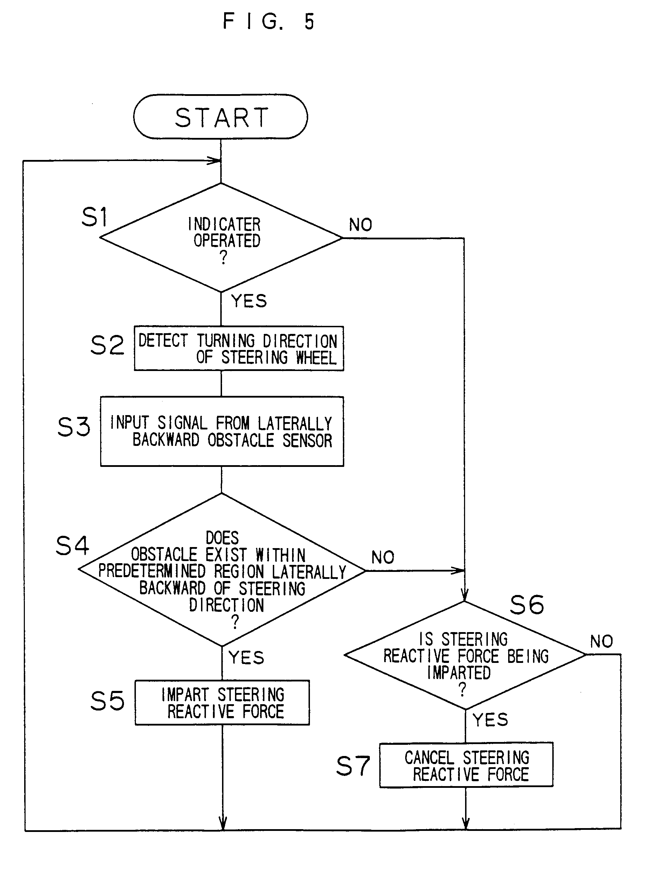

Nextly, a description will be given on the flow of control with reference to the flow chart of Fig. 5.

When activated, the steering apparatus detects whether an indicator lamp is turned on or not based on an output of the indicator sensor 44 (Step S1). If the indicator lamp is turned on, the turning direction of the steering wheel SW is detected according to an output of the steering angle sensor 43 (Step S2). Then outputs of the laterally backward obstacle sensors on the both sides of the vehicle are supplied (step S3), so that judgment is made on whether an obstacle exists within a predetermined region laterally backward of the steering direction (Step S4).

If it is determined in Step S4 that an obstacle exists within the predetermined region laterally backward of the steering direction, the following Step S5 is carried out to impart a steering reactive force. The steering reactive force is imparted in the following manner. More specifically, by controlling the control valves CV1, CV2, the control section 70 causes the plungers 31 to restrict the relative rotation of the input shaft 11 with respect to the output shaft 12 as well as the plungers 61 to restrict the relative rotation of the housing H with respect to the output shaft 12. As a result, the relative rotation of the input shaft 11 with respect to the housing H is restricted, thereby to impart a steering reactive force such that there is required a steering control force greater than when no steering assist force is imparted. Consequently, a driver is assuredly made aware of the presence of a dangerous obstacle, and is inhibited from steering to that direction.

If it is determined in Step S4 that an obstacle does not exist within the predetermined region laterally backward of the steering direction, the following Step S 6 is carried out to control the control valves CV1., CV2 to cancel the impartation of the steering reactive force providing that the steering reactive force is being imparted (Step S7). Then the control flow returns to Step S1.

This embodiment of the present invention is particularly effective when the vehicle is running faster than a given speed. More specifically, because the control assist force is very small when the vehicle is running faster than a given speed, the conventional mode to reduce the steering assist force to zero fails to make the driver aware of a change in the steering reactive force. Whereas this embodiment of the present invention has the input shaft 11 fixed to the housing H as described above, thereby exerting a greater steering reactive force than that in manual operation (or when the steering assist force is zero), so that the driver is assuredly made aware of the existence of the dangerous obstacle.

According to the conventional mode of the steering assist adjusting mechanism disclosed in Japanese Unexamined Patent Publication No. 19274/1992 where an amount of oil fed to the control valve is adjusted, unrestricted torsion of the torsion bar 13 will result in the occurrence of an insensitive region of, for example, initial turning angular of about 5 degrees with respect to the turning angular of 20 degrees, in which the driver is not made aware of an increase in the steering control force. This may cause a delay in the driver's recognition of danger. Whereas this embodiment of the present invention wherein a torsion of the torsion bar 13 is restricted does not result in the occurrence of the above mentioned insensitive region, and consequently, can assuredly make the driver aware of danger without time delay.

This embodiment of the present invention is particularly adapted such that after recognition of the driver's intention from the operation of the turn indicator, the steering operation is restricted in response to the recognition, and hence, unnecessary restriction is avoided.

Said embodiment may also be adapted such that the aforesaid plungers 61 may not be pressed against, if when the vehicle is running at a low speed with a great steering assist force imparted, only reduction of the steering assist force to zero is considered sufficient for the driver to be made aware of the change.

SECOND EMBODIMENT

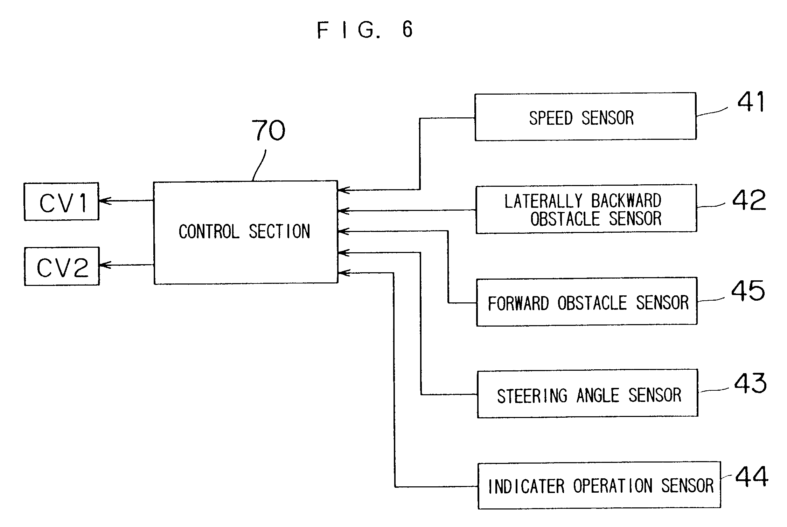

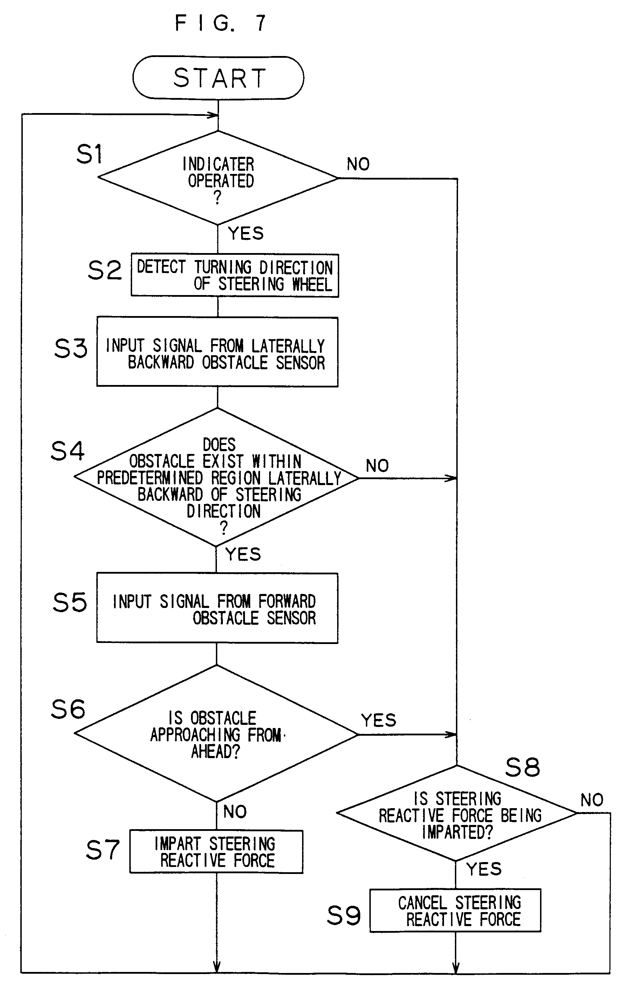

Fig. 6 is a block diagram illustrating the electric construction of the second embodiment of the present invention, and Fig. 7 illustrates the control flow thereof. With reference to Fig. 6, the construction of this embodiment differs from that of the first embodiment in that this embodiment comprises a forward obstacle sensor 45 for detecting an obstacle ahead of the vehicle. The forward obstacle sensor 45 may be exemplified by a construction including a CCD camera as a two-dimensional image pick-up means and a signal processing portion for rendering signal of the camera processable. When fed with an image data by said signal processing portion, the control section 70 calculates variation in the area of the two-dimensional image of an object such as a vehicle running ahead which is obtained from the two-dimensional image data, and judges that the vehicle is approaching to the object ahead thereof if the area of said two-dimensional image increases.

Referring to Fig. 7, since the procedures from Step S1 through Step S4 are the same as that of the flow chart in Fig. 5, the description thereof will be omitted. If it is determined in Step S4 that an obstacle exists in a predetermined region of the steering direction, the following Step S5 is carried out to input a signal of the forward obstacle sensor 45. Nextly if it is determined in Step S6 that no obstacle is approaching from ahead, the steering reactive force is imparted (Step S7). On the other hand, if it is determined in Step S4 that there is no obstacle in the predetermined region of the steering direction, and if it is determined in Step S6 that an obstacle is approaching from ahead, the impartation of the steering reactive force is canceled providing that the steering reactive force is being imparted (Steps S8, S9).

This embodiment presents the following effect in addition to the same effect as the first embodiment. More specifically, even when the steering reactive force is being imparted to avoid a collision with an obstacle laterally backward, the impartation of the steering reactive force is canceled if the obstacle is approaching from ahead. This allows the driver to take a flexible reaction against an unforeseen occurrence like approach of an obstacle from ahead, thereby helping to prevent in advance the occurrence of the secondary accident.

THIRD EMBODIMENT

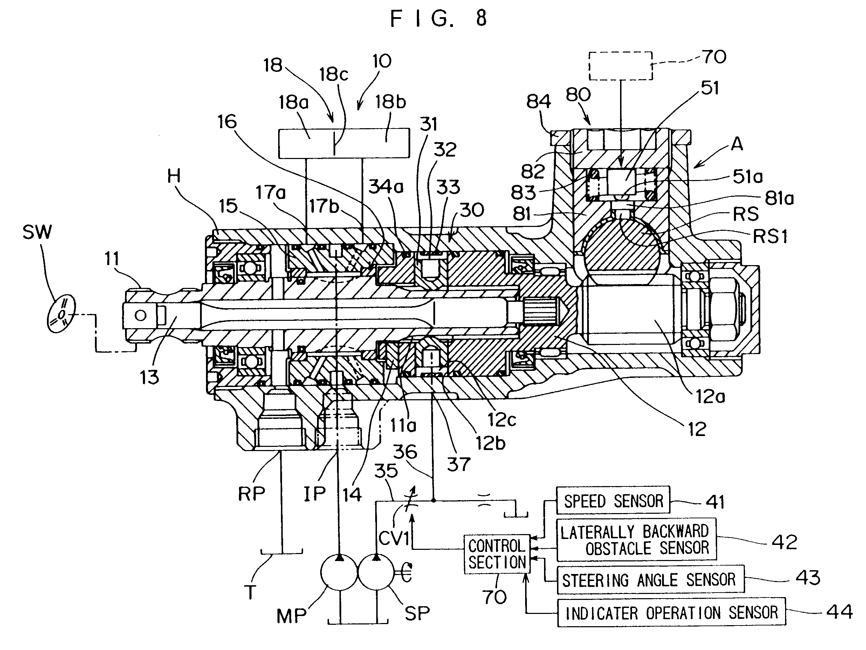

Fig. 8 illustrates the third embodiment of the present invention. With reference to the same figure, the construction of this embodiment differs from that of the first embodiment of Fig. 1 in that 1) the second relative rotation inhibiting mechanism 60A, oil passage 38 and control valve CV1 are eliminated, and instead that 2) a plunger 51 as a pressing member for pressing the rack shaft RS when necessary is provided.

The plunger 51 is comprises a known electric plunger, and causes a rod 51a to extend/contract in response to a signal from the control section 70. The rod 51a of the plunger 51 is mounted to the fixed member 82 of the pre-load imparting mechanism 80. When necessary, the plunger 51 is caused to extend/contract to press the projection bar RS1 of the rack shaft RS via the groove 81a of the slide member 81, thus inhibiting the rack shaft RS from moving axially. Since the inhibition of an axial movement of the rack shaft RS leads to the inhibition of relative rotation of the output shaft 12 with respect to the housing H, said plunger 51 composes the second relative rotation inhibiting mechanism of the first embodiment in Fig. 1.

According to this embodiment, the control section 70 uses the control valve CV1 to restrict the relative rotation of the input shaft 11 with respect to the output shaft 12, and causes the plunger 51 to inhibit the movement of the rack shaft RS thereby restricting the relative rotation of the output shaft 12 with respect to the housing H. This allows to impart a required steering reactive force to the steering wheel SW, and thus to assure safety just as the first embodiment.

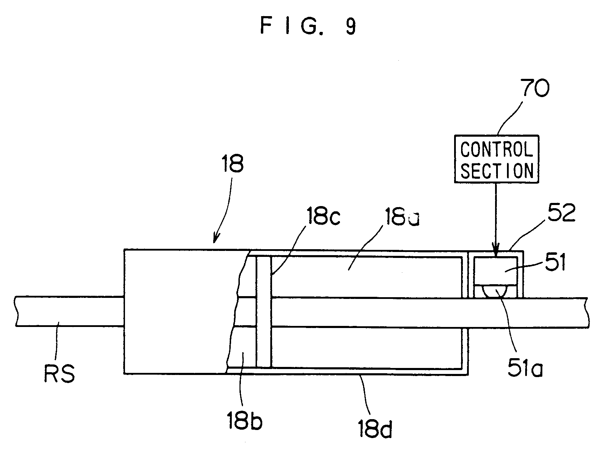

As shown in Fig. 9, this embodiment may be arranged such that the plunger 51 is accommodated in a casing 52 fixed adjacently to the power cylinder 18. In stead of the electric plunger, an piezo-electric element may be used as the plunger 51.

FOURTH EMBODIMENT

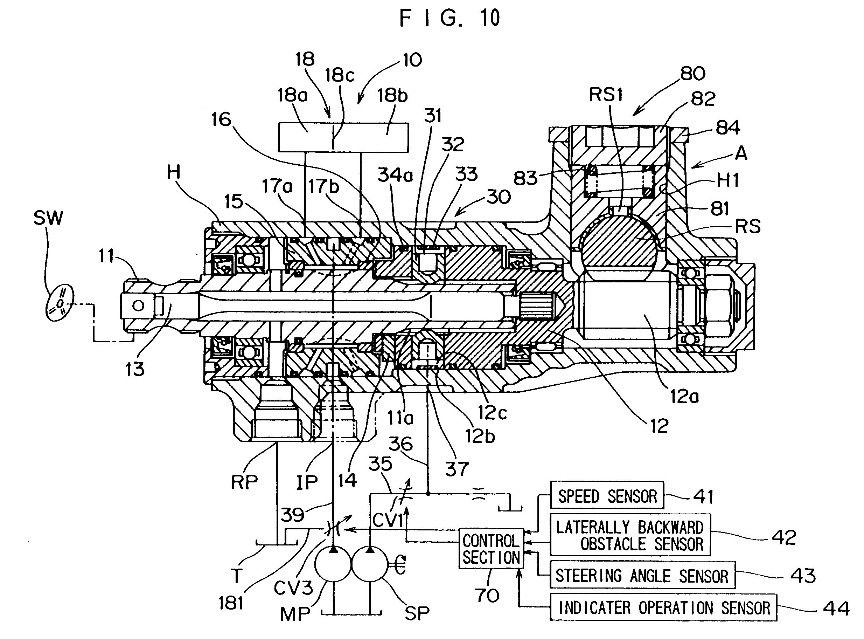

Fig. 10 illustrates the fourth embodiment of the present invention. Referring to the same figure, the construction of this embodiment differs from that of the first embodiment shown in Fig. 1 in that 1) the second relative rotation inhibiting mechanism 60A, oil passage 38 and control valve CV1 are eliminated, and that 2) a control valve CV3 is provided on an oil passage 39 between the main pump MP and the in-port IP, such that by operating this control valve CV3 when necessary, at least a part of the pressure oil to be fed to the rotary valve mechanism 16 is returned through an oil passage 181 to the tank T.

According to this embodiment, the control section 70 uses the control valve CV1 to restrict the relative rotation of the input shaft 11 with respect to the output shaft 12 and uses the control valve CV3 to inhibit the supply of the pressure oil to the power cylinder 18 for restricting the axial movement of the rack shaft RS. Thus, a required steering reactive force is imparted to the steering wheel SW such that this embodiment may assure safety just as the first embodiment.

According to this embodiment, the control valve CV3 may be replaced by a switch valve for returning the pressure oil to the tank T.

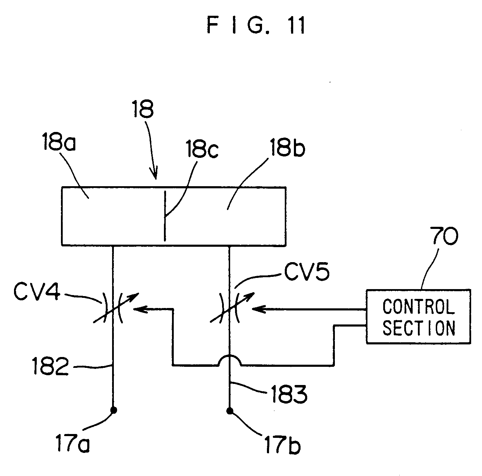

As shown in Fig. 11, this embodiment may be arranged such that instead of the control valve CV3, control valves CV4, CV5 are disposed on oil passages 182, 183 respectively which communicate the oil chambers 18a, 18b to corresponding cylinder ports 17a, 17b of the power cylinder 18. In this case, by selectively closing the control valve CV4 (CV5) corresponding to the oil chamber 18a (18b) which is capable of generating the steering assist force, the axial movement of the piston 18c of the power cylinder 18 is inhibited.

Further, this embodiment may eliminate the steering assist adjusting mechanism 30 as the first relative rotation inhibiting mechanism. In this case, the characteristic of this embodiment to inhibit the supply of pressure oil to the power cylinder applies to the typical power assist device.

FIFTH EMBODIMENT

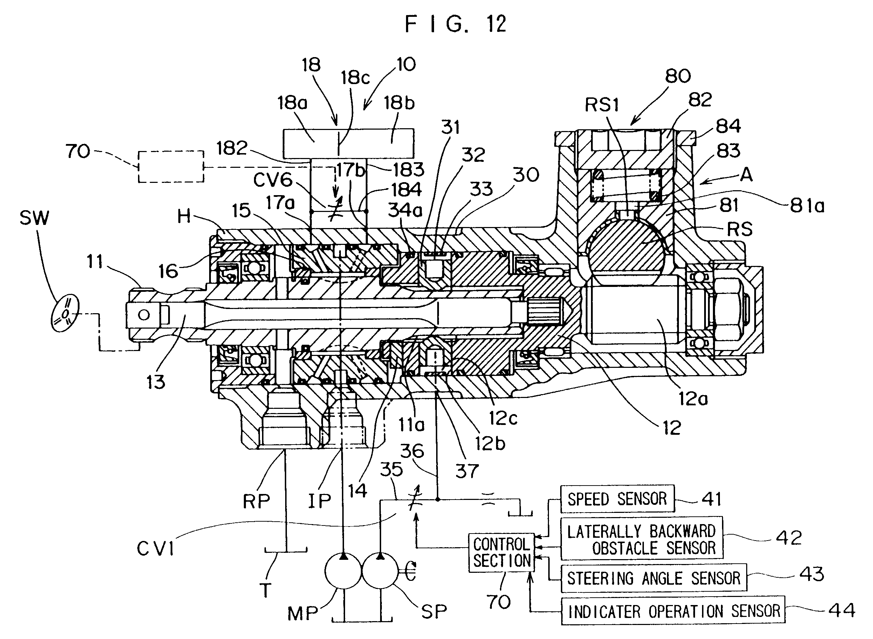

Fig. 12 illustrates the fifth embodiment of the present invention. Referring to the same figure, the construction of this embodiment differs from that of the first embodiment in that 1) the second relative rotation inhibiting mechanism 60A, oil passage 38 and control valve CV2 are eliminated, and that 2) a communicating oil passage 184 is disposed between the oil passage 182 communicating the cylinder port 17a and the oil chamber 18a and the oil passage 183 communicating the cylinder port 17b and the oil chamber 18b, the communicating oil passage 184 including a control valve CV6.

According to this embodiment, the control section 70 uses the control valve CV1 to restrict the relative rotation of the input shaft 11 with respect to the output shaft 12, and uses the control valve CV6 to let a part of the pressure oil at a high pressure side to be fed to the power cylinder 18 flow to the low pressure side. As a result, differential pressure between the oil chambers 18a and 18b in the power cylinder 18 is made to decrease, so that the axial movement of the rack shaft RS is restricted. This allows to impart a required steering reactive force to the steering wheel SW, thereby assuring safety just as the first embodiment.

In this embodiment, the control valve CV6 which is a variable valve may be replaced by a switching valve.

This embodiment may also eliminate the steering assist adjusting mechanism 30 as the first relative rotation inhibiting mechanism. In this case, the characteristic of this embodiment to inhibit the supply of pressure oil to the power cylinder applies to the typical power assist device.

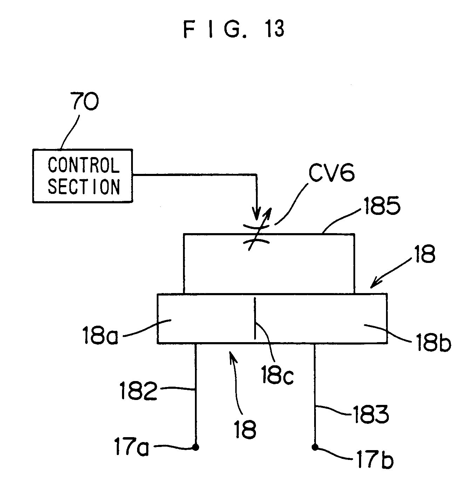

Additionally in this embodiment, the communicating oil passage 184 is disposed between the oil passages 182 and 183. As shown in Fig. 13, an alternative arrangement may be made such that a communicating oil passage 185 is disposed directly linking the oil chambers 18a and 18b, said control valve CV6 being disposed on this communicating oil passage 185.

SIXTH EMBODIMENT

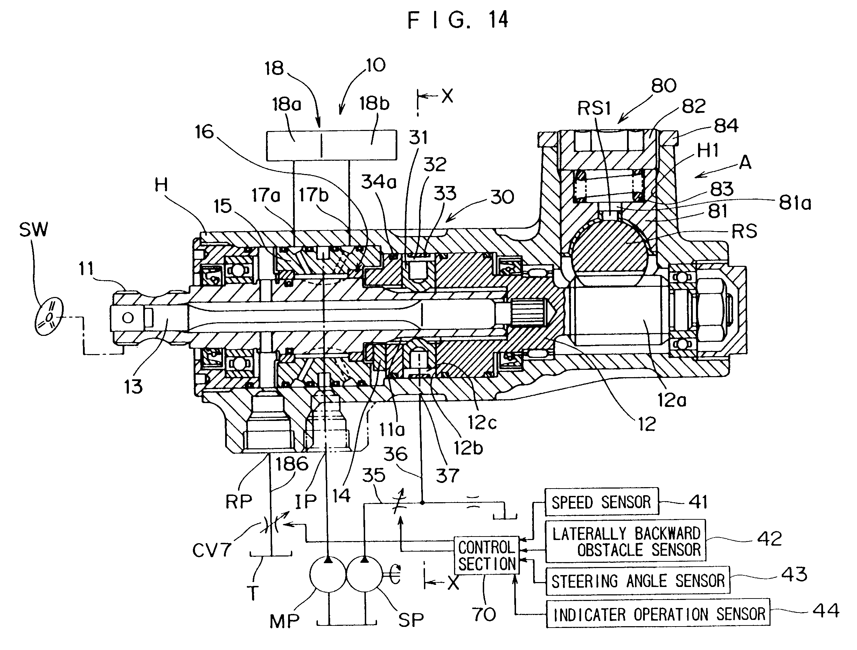

Fig. 14 illustrates the sixth embodiment of the present invention. With reference to the same figure, the construction of this embodiment differs from that of the first embodiment in that 1) the second relative rotation inhibiting mechanism 60A, oil passage 38 and control valve CV2 are eliminated, and that 2) a control valve CV7 for controlling an oil to be returned from the power cylinder 18 is disposed on an oil passage 186 between the return port RP and tank T.

According to this embodiment, the control section 70 uses the control valve CV1 to restrict the relative rotation of the input shaft 11 with respect to the output shaft 12, and uses the control valve CV7 to limit the amount of oil to be returned from the power cylinder 18 to the tank T. This will allow to augment the pressure in the oil chamber 18a(18b) capable of generating the steering reactive force, and hence the axial movement of the rack shaft RS is restricted. Accordingly, a required steering reactive force is imparted to the steering wheel SW, and hence this embodiment may assure safety just as the first embodiment.

In this embodiment, the control valve CV7 which is a variable valve may be replaced by a switching valve.

Further in this embodiment, the steering assist adjusting mechanism 30 as the first relative rotation inhibiting mechanism may be eliminated. In this case, the characteristic of this embodiment to inhibit the supply of pressure oil to the power cylinder applies to the typical power assist device.

In said embodiment, the control valve CV7 for restricting the amount of oil to be returned is disposed on the oil passage 186 between the return port RP and the tank T. Instead, this embodiment may also be of the similar construction to that shown in Fig. 11, where the control section 70 selectively closes (or throttles) only the control valve CV4 (CV5) corresponding to the oil chamber capable of generating the steering reactive force, thereby restricting the amount of the oil to be returned from the power cylinder 18.

SEVENTH EMBODIMENT

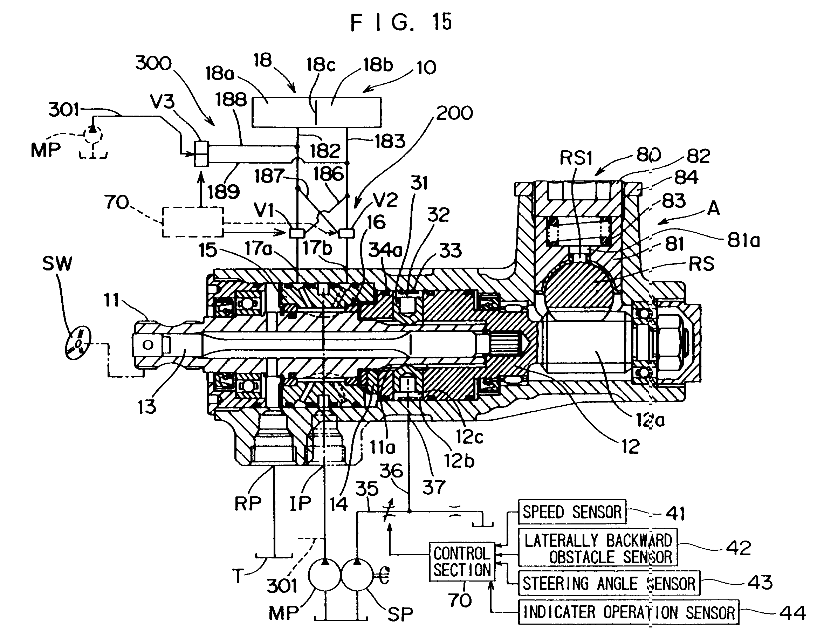

Fig. 15 illustrates the seventh embodiment of the present invention. Referring to the same figure, the construction of this embodiment differs from that of the first embodiment in that 1) the second relative rotation inhibiting means 60A, oil passage 38 and control valve CV2 are eliminated, and that 2) an oil passage switching mechanism 200 and an oil amount increasing mechanism 300 are disposed between the rotary valve mechanism 16 and the power cylinder 18.

The oil passage switching mechanism 200 includes: 1) a pair of the oil passages 186 and 187 for communicating the oil passages 182 and 183 respectively, 2) a switching valve V1 disposed on the oil passage 182 and capable of selectively switching the passages to make the cylinder port 17a communicated either with the oil chamber 18a or 18b, and 3) a switching valve V2 disposed on the oil passage 183 and capable of selectively switching the passages to make the cylinder port 17b communicated either with the oil chamber 18a or 18b. The switching valve V1 is switched to the oil passage 186 to make the cylinder port 17a communicated with the oil chamber 18b. The switching valve V2 is switched to the oil passage 187 to make the cylinder port 17b communicated with the oil chamber 18a. If the both switching valves V1, V2 are simultaneously switched to the oil passages 186 and 187, the combination of the cylinder ports 17a, 17b and the oil chambers 18a, 18b is inverted from a normal combination in which the steering assist force is generated, and hence the steering reactive force is generated.

The oil amount increasing mechanism 300 comprises: 1) an oil passage 301 for introducing the pressure oil from the main pump MP, 2) oil passages 188, 189 for connecting the oil passage 301 to the oil chambers 18a, 18b respectively, and 3) a switching valve V3 disposed at a portion where the oil passage 301 is branched into the oil passages 188 and 189, and switching either to the oil passage 188 or 189.

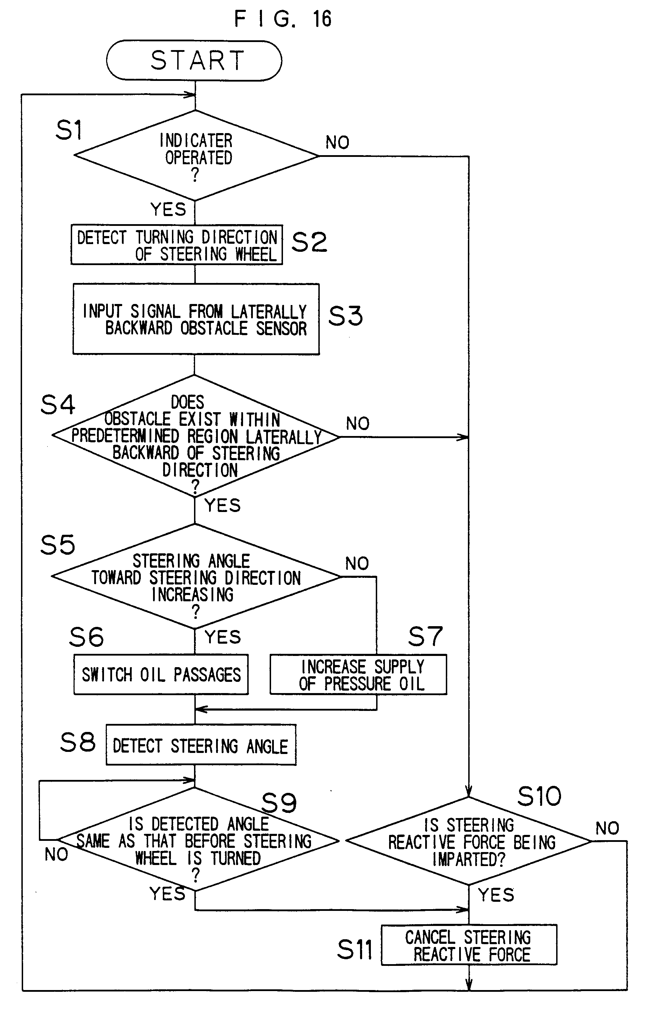

With reference to the flow chart of the Fig. 16, description will be made on the flow of control.

Since the procedures of Step S1 through S4 are the same as in the first embodiment shown in Fig. 1, the description thereof is omitted. If it is determined in Step S4 that an obstacle exists in the predetermined region laterally backward of the steering direction, the following Step S5 is carried out to judge if the steering angle toward the steering direction is increasing or not.

If it is determined in Step S5 that the steering angle toward the steering direction is increasing, the next Step S6 is performed to impart the steering reactive force by simultaneously switching the switching valves V1, V2. Whereas if it is determined in Step S5 that the steering angle is not increasing, Step S7 is performed to switch the switching valve V3 either to the oil passage 188 or 189 thereby increasing a supply of the pressure oil to the oil chamber 18a (18b) capable of generating the steering assist force.

Nextly, the steering angle is detected again in Step S8, and if the steering angle remains the same as that before the steering wheel is turned, the switching valves V1, V2 are returned to the original positions, thus canceling the impartation of the steering reactive force (Steps S9, S11).

If it is determined in Step S4 that an obstacle does not exist in the predetermined region laterally backward of the steering direction, the impartation of the steering reactive force is canceled providing that the steering reactive force is being imparted (Steps S10, S11).

This embodiment assures safety just as the first embodiment because a required steering reactive force is imparted to the steering wheel SW when the vehicle is steered to a dangerous direction. This embodiment is particularly effective when the vehicle is running along a curve because of the following three reasons. Whereas the conventional mode wherein the steering reactive force is simply imparted to a vehicle running along a curve may cause the vehicle deviate from the course, this embodiment 1) imparts the steering reactive force only when the vehicle is steered in a direction where the obstacle exists, 2) cancels the impartation of the steering reactive force when the driver is returning the steering wheel to a steering angle before the driver turned it, and 3) assists steering control to facilitate an avoidance of the obstacle when the driver is steering in a direction to avoid the obstacle. This embodiment allows an active control of the vehicle with a proper steering angle to keep the vehicle on the curved course.

In this embodiment, each of the switching valves V1, V2 and V3 may be replaced by a variable control valve.

This embodiment imparts the steering reactive force by switching the oil passages to the power cylinder 18, but instead, the steering reactive force may be imparted by any of the modes of embodiments shown in Figs. 1, 8, 9, 10, 11, 12, 13 and 14.

This embodiment may further eliminate the steering assist adjusting mechanism 30 as the first relative rotation inhibiting mechanism. In this case the characteristic of this embodiment to inhibit the supply of the pressure oil to the power cylinder applies to the typical power assist device.

EIGHTH EMBODIMENT

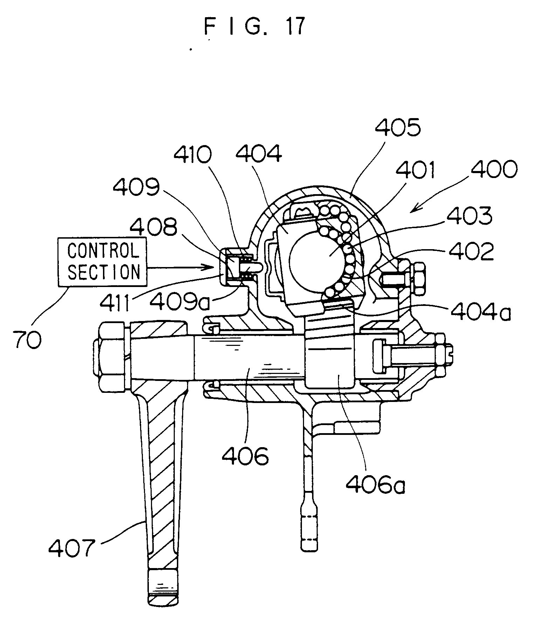

Fig. 17 illustrates the eighth embodiment of the present invention. Although the first through seventh embodiments all employ a rack and pinion type steering gear, this embodiment employs a recirculating ball type steering gear 400 as a power transmission device, citing an example in which the steering reactive force is imparted to the recirculating ball type steering gear mechanism.

Referring to Fig. 17, the recirculating ball type steering gear 400 comprises: 1) a worm gear 402 formed on a steering shaft 401, and 2) a ball nut 404 sliding against the worm gear 402 through balls 403.

The both end sides of the steering shaft 401 having the worm gear 402 portion interposed therebetween are supported by a steering gear box 405 by means of bearings (not shown).

The steering gear box 405 also accommodates a sector shaft 406 having a gear 406a meshed with a gear 404a formed on the outer periphery of the ball nut 404. The sector shaft 406 extends outwardly from the steering gear box 405, and on the tip end thereof, a pitman arm 407 is integrally mounted.

When a driver operates the steering wheel, the rotation of the steering shaft 401 accompanies the axial movement of the ball nut 404 (in the direction orthogonal to this paper surface in the figure), so that the sector shaft 406 is rotated. Consequently, the pitman arm 407 is pivoted to control the steering by means of a steering linkage (not shown).

The mechanism for imparting the steering reactive force characterizing this embodiment is a plunger 409 accommodated in an accommodation hole 408 formed in the steering gear box 405. The plunger 409 comprises an electromagnetic plunger, which in response to a signal from the control section 70, causes a rod 408a to extend and press the outer periphery of the ball nut 404, thereby inhibiting the axial movement of the ball nut 404. A compression coil spring 410 is interposed between the plunger 409 and the bottom of the accommodation hole 408. The entrance of the accommodation hole 408 is closed with a cover 411.

NINTH EMBODIMENT

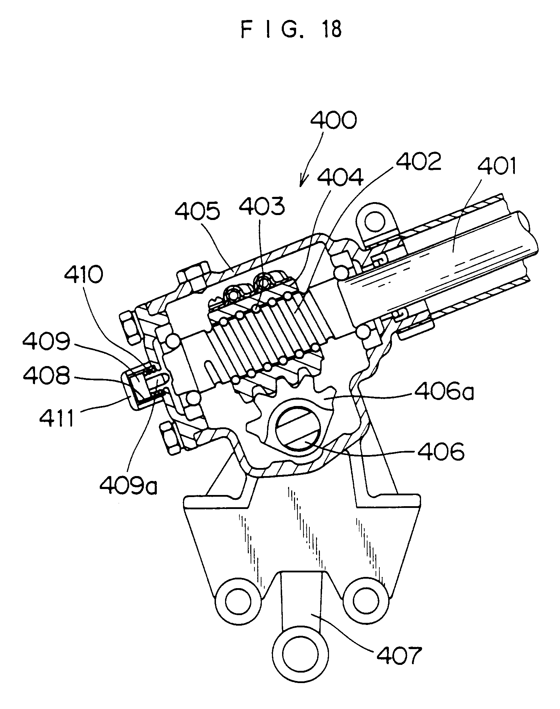

Fig. 18 illustrates the ninth embodiment of the present invention. This embodiment differs from the eighth embodiment in that whereas the eighth embodiment imparts the steering reactive force by inhibiting the movement of the ball nut 404, this embodiment imparts the steering reactive force by inhibiting the rotation of the steering shaft 401.

In this embodiment, the plunger 409 is adapted to press an end of the steering shaft 401. Since the rest of the construction is the same with the eighth embodiment of Fig. 17 with the designations thereof referring to the same, the description thereof is omitted.

TENTH EMBODIMENT

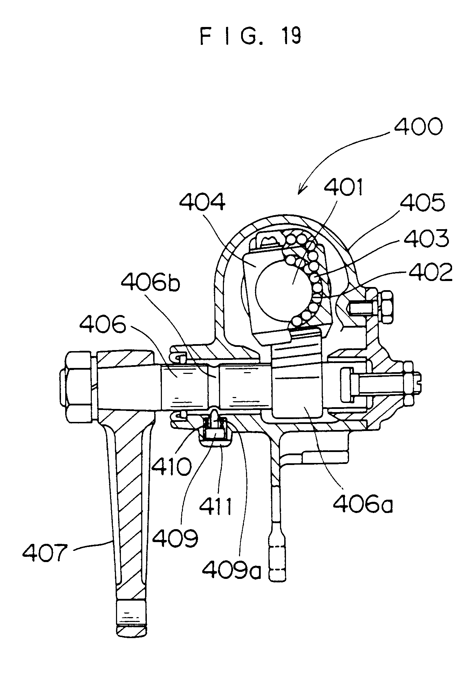

Fig. 19 illustrates the tenth embodiment of the present invention. This embodiment differs from the eighth embodiment in that the plunger 409 is disposed where it can press a peripheral groove 406b defined on the peripheral surface of the sector shaft 406, so that the steering reactive force is generated by inhibiting the rotation of the sector shaft 406.

In this embodiment, as well, the description is omitted on designations referring to the same in Fig. 17 illustrating the eighth embodiment.

ELEVENTH EMBODIMENT

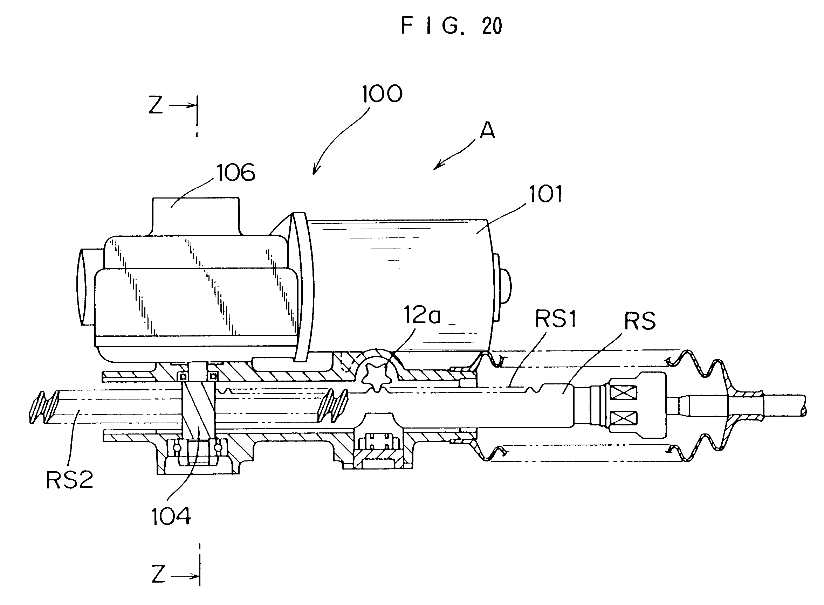

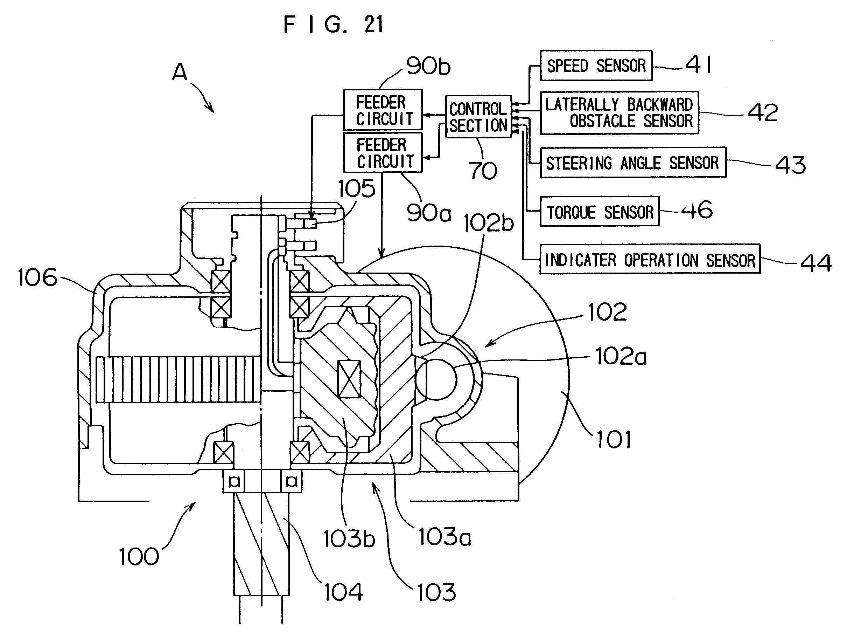

Fig. 20 as well as Fig. 21 showing a sectional view taken on line Z-Z in Fig. 20 illustrate the eleventh embodiment of the present invention. Referring to Figs. 20 and 21, a steering apparatus for use in a vehicle according to this embodiment has an electric type power assist device 100 for adjusting a torque of a DC motor 101 disposed parallel to the rack shaft RS, and is adapted to impart a brake force generated by said motor 101 stopped and an decelerating mechanism for decelerating the motor 101 as the steering reactive force for the purpose of avoiding a dangerous obstacle. On the rack shaft RS, the first rack gear RS1 for receiving manual steering control force through the pinion 12a and the second rack gear RS2 for transmitting an assist force from the power assist device 100 are defined.

The power assist device 100 comprises: 1) said motor 101, 2) a decelerating mechanism 102 including a worm shaft 102a coaxially fixed to a drive shaft of the motor 101 and a worm wheel 102b meshed with the worm shaft 102a, 3) a powder clutch 103 including a drive shaft 103a fixed to said worm wheel 102b and a driven shaft 103 b mated with the upper surface rack gear RS2 of the rack shaft RS, and 4) a pinion 104 fixed to said driven shaft 103b of the powder clutch 103 and meshed with the second rack gear RS2 of the rack shaft RS.

Said decelerating mechanism 102 and powder clutch 103 are housed in a casing 106 along with a slip ring 105 for supplying electric power to the powder clutch 103. Said powder clutch 103 is of a known structure where magnetic powder is interposed between the drive shaft 103a and the driven shaft 103b. Through energizing a coil which is not shown, the powder clutch 103 couples the drive shaft 103a and the driven shaft 103b with a coupling force determined corresponding to the amount of electric power supplied.

To the control section 70, connected are the speed sensor 41, laterally backward obstacle sensor 42, steering angle sensor 43 and a torque sensor 46. Said torque sensor 46 is provided at a predetermined position of a handle column and feeds the control section 70 an output corresponding to the steering direction and load of the steering wheel SW. Through feeder circuits 90a and 90b respectively, the control section 70 feeds the motor 101 and the powder clutch 103 electric power corresponding to an output of the torque sensor 46. Thus a torque of the motor 101 is transmitted to the rack shaft RS through the decelerating mechanism 102, powder clutch 103 and pinion 104. The powder clutch 103 transmits a motor torque not more than necessary corresponding to the power supplied, and hence, an assist force depending on the load is transmitted to the rack shaft RS.

Since the control flow is the same with that of Fig. 1, the description thereof is omitted. However, in contrast to the example shown in Fig. 1 where the control valves CV1 and CV2 are controlled, this embodiment is adapted such that the motor 101 and the powder clutch 103 are controlled. More specifically, if there is another vehicle in the direction where the vehicle is steered, the control section 70 stops feeding the motor 101 while keeping feeding the powder clutch 103. Accordingly, the brake force caused by the motor 101 and decelerating mechanism 102 is imparted as the steering reactive force with respect to turning of the steering wheel SW, thereby increasing the steering control force. This will assuredly make the driver aware of the dangerous obstacle and also restricts the driver from steering to such direction.

As compared to an example where a separate means for applying the brake torque is provided, this embodiment simplifies the structure because it uses the motor 101 to obtain the steering assist force and the decelerating mechanism 102 to apply the brake torque. Further, the worm gear as the decelerating mechanism has a low inverted transmission efficiency and hence allows to obtain a sufficient resistance. What is more, the powder clutch 103 which is free from locking is employed such that no damage may be caused on the motor 101 when it serves as the brake.

Alternatively, by applying a counter electromotive force to the motor 101, a greater brake force may be attained. Otherwise, another known brake mechanism may be provided at any of the parts driven by the motor 101. In the rack and pinion type steering gear, for example, the brake force may be attained by pressing the rack shaft RS as shown in Fig. 8 of the third embodiment, or in the recirculating ball type steering gear, the brake force may be attained by pressing the ball nut, steering shaft and sector shaft as shown in Figs. 17 through 19 illustrating the eighth through the tenth embodiments.

TWELFTH EMBODIMENT

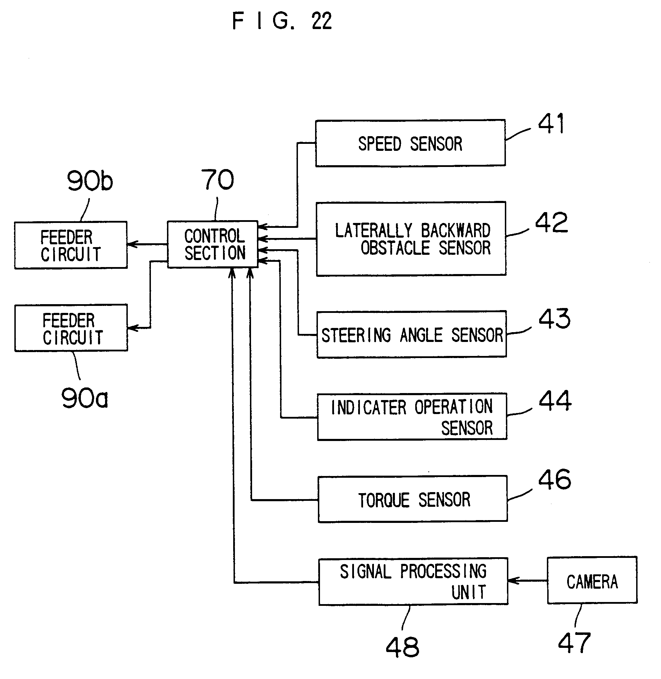

Fig. 22 is a block diagram illustrating the electric construction of a steering apparatus for use in a vehicle according to the twelfth embodiment of the present invention. Referring to the same figure, this embodiment differs from the eleventh embodiment of Fig. 21 in that this embodiment comprises a CCD camera 47 as an image pick-up means for picking up an image in front of the vehicle and a signal processing unit 48 for processing a signal from this camera 47, the signal processing unit 48 being connected to the control section 70. The signal processing unit 48 renders a signal from the camera 47 processable for the control section 70. Said camera 47, signal processing unit 48 and control section 70 compose a running position detecting means

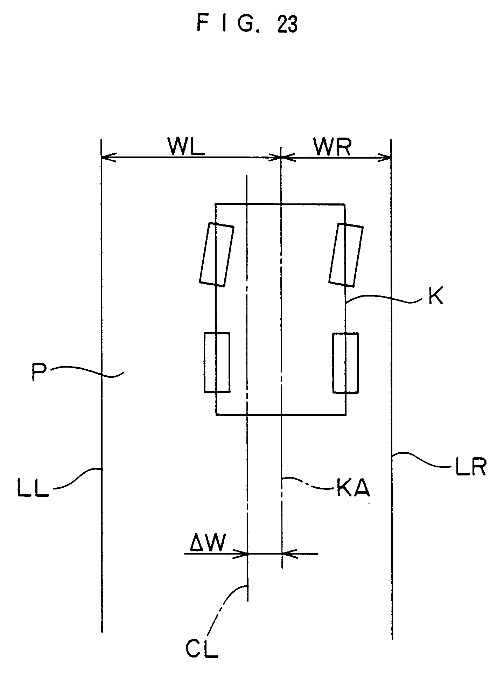

Referring to Fig. 23, receiving a signal from the signal processing unit 48, the control section 70 uses guide lines LR, LL ahead on a road where the vehicle K is running to detect a traveling passage P separated by the guide lines LR, LL, thereby determining whether or not the present position KA of the vehicle K deviates by more than a predetermined amount toward the steering direction from the hypothetical center line CL of the traveling passage P. If the vehicle is steered to the left (to the LL side guide line), the following equation is used to calculate a deviation DW of the present position KA of the vehicle K from the hypothetical center line CL:

$$DW = (WL - WR) /2, \text{ and}$$

if the vehicle K is steered to the right (to the RL side guide line), the following equation is used for the calculation:

$$DW = (WR - WL) /2$$

wherein WR is a distance from the present position KA of the vehicle K and the right side guide line LR, and WL is that from the present position KA of the vehicle K and the left side guide line LL.

If the deviation value DW is positive, it means that the present position of the vehicle deviates from the hypothetical center line to the side where the vehicle is steered. If the value DW is negative, it means that the present position of the vehicle deviates from the hypothetical center line to the opposite side where the vehicle is steered.

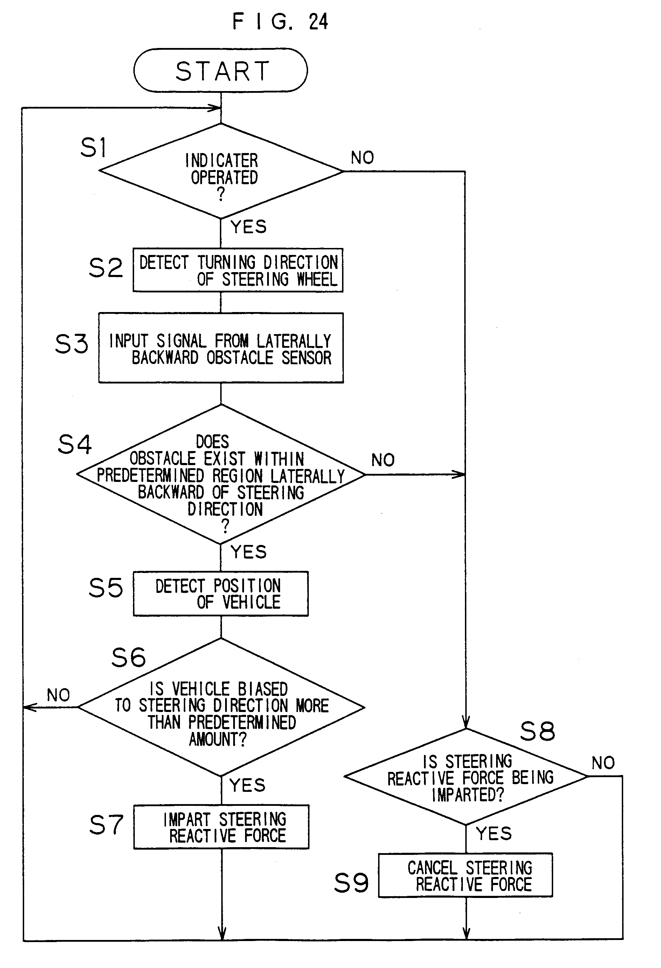

The flow of control will be described by way of the flow chart shown in Fig. 24. Steps S1 through S4 refer to the same of the flow chart shown in Fig. 5, and therefore, the description thereof is omitted.

If it is determined in Step S4 that an obstacle exists in the predetermined region laterally backward of the steering direction, the next Step S5 is performed to detect the present position of the vehicle by inputting a signal from the signal processing unit 48, and is followed by Step S6. In Step S6, providing that the present position of the vehicle deviates more than a predetermined amount (DW exceeds a predetermined amount) from the hypothetical center line CL of the traveling passage P toward the steering direction (Step S6), the steering reactive force is imparted (Step S7). On the other hand, if it is determined in Step S4 that the obstacle does not exist in the predetermined region laterally backward of the steering direction, providing that the steering reactive force is being imparted, the impartation of the steering reactive force is canceled (Steps S8, 9).

As shown in the following table 1, for example, if the deviation DW is positive, or in other words, the present position of the vehicle deviates from the hypothetical center line CL to the steering direction, a steering reactive force A1, A2 or A3, which is increased in the order named, is imparted depending on the degree of deviation DW. Whereas if DW is negative, or the present position of the vehicle deviates from the hypothetical center line CL to the opposite side of the steering direction, it is adapted such that the steering reactive force is not imparted. In this table, each of the elements is in a relationship of $0 < E1 < E2 < E3$, and $A1 < A2 < A3$.

TABLE 1

| DW | Steering Reactive Force (SRF) |
|---|---|
| DW < 0 | SRF not imparted |
| 0 < DW < E1 | SRF A1 imparted |
| E1 < DW < E2 | SRF A2 imparted |
| E2 < DW < E3 | SRF A3 imparted |
| (wherein steering reactive force is in a relationship of A1 < A2 < A3 .) | |

THIRTEENTH EMBODIMENT

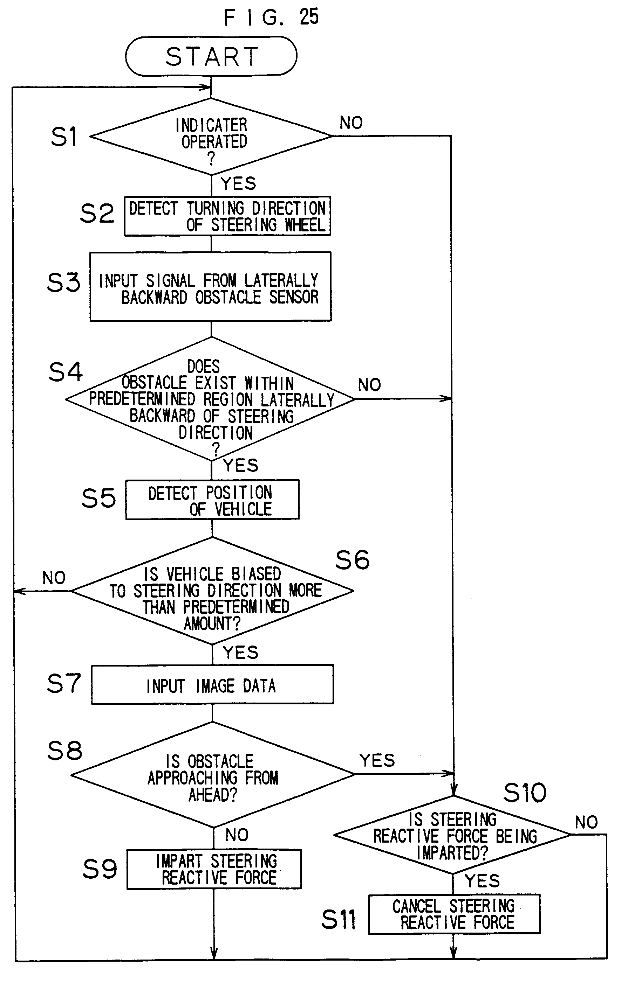

Fig. 25 illustrates the thirteenth embodiment of the present invention. This embodiment differs from the twelfth embodiment of Fig. 22 in that the control section 70 is adapted to detect an obstacle approaching from ahead in addition to detecting the present position of the vehicle based on a signal from the signal processing unit 48.

When supplied with two-dimensional image data of forward objects such as vehicle or others taken by the camera 47, the control section 70 calculates the variation in the area of the two-dimensional image of such object obtained from the two-dimensional image data. If the area of said two-dimensional image increases, it is judged that another vehicle is approaching from ahead.

With reference to the flow chart shown in Fig. 25, Steps S1 through S6 refer to the same in the flow chart shown in Fig. 24 and therefore, the description thereof is omitted. If it is determined in Step S6 that the present position of the vehicle deviates to the steering direction by more than a predetermined amount, the next Step S7 is performed to input an image data from the camera 47 and to impart the steering reactive force if no obstacle is approaching from ahead (Steps S8, S9). If there the obstacle is approaching from ahead, providing that the steering reactive force is being imparted, the impartation of steering reactive force is canceled (Steps S10, S11).

Similar to the twelfth embodiment shown in Fig. 22, this embodiment can prevent the vehicle from deviating from the lane where it is running, when the steering reactive force is imparted to restrict the vehicle from turning to a direction where the obstacle exists. Additionally if the obstacle is approaching from ahead, the impartation of the steering reactive force is canceled. Accordingly, the driver can take a flexible reaction against an unforeseen occurrence like approach of the obstacle from ahead, and hence can prevent in advance the occurrence of the secondary accident.

It should be appreciated that the present invention is not confined to the above embodiments but may be embodied in other specific forms without departing from the spirit or essential characteristics thereof. For example, the predetermined action detecting means should not be limited to said indicator operation sensor but may detect the operation of brake or others.

Further, the laterally backward obstacle sensor may be replaced by an environment recognition equipment by means of image processing which is disclosed in Japanese Unexamined Patent Publication No. 231190/1987.

Further, the control flow of the twelfth and thirteen embodiments may apply to the hydraulic power assist device of the first, the third through sixth and the eighth through thirteenth embodiments. The design of the present invention may be modified without departing from the terms of the claims.

**Claims**

1. A steering apparatus for steering a vehicle with a steering wheel (SW), comprising:

   steering force means (30, 60) for supplying a steering force to said steering wheel (SW);

   obstacle detecting means (42) for detecting an obstacle around the vehicle;

   control means (70) for controlling the steering force to be supplied in response to predetermined conditions;
   characterized in that
   said steering force means comprise steering reactive
   force imparting means (60);
   said control means (70) being adapted to cause said reactive force imparting means (60) to impart a reactive force to the steering wheel against turning to a predetermined direction under the predetermined conditions that the presence of an obstacle is detected around the vehicle by said obstacle detecting means (42).

2. A steering apparatus according to Claim 1, further comprising:

   steering direction detecting means (43) for detecting a turning direction of said steering wheel (SW),
   wherein said predetermined conditions include detection of the existence of the obstacle in a predetermined region in the turning direction of said steering wheel (SW) based on outputs of said obstacle detecting means (42) and said steering direction detecting means (43), said predetermined turning direction of said steering wheel (SW) being a direction in which the obstacle exists.

3. A steering apparatus according to Claim 2, further comprising running position detecting means (47, 48, 70) for detecting a position of the vehicle running in a road lane (P) with respect to the transverse direction of the vehicle, wherein said control means (70) is adapted to find a steering angle adjust value required for preventing the vehicle from deviating from the lane (P) based on said transverse position and determines the amount of steering reactive force depending on said steering angle adjust value thus found.

4. A steering apparatus according to any one of the Claims 1 to 3, further comprising obstacle approach detecting means (45, 70) for detecting an obstacle approaching from ahead, wherein said predetermined conditions include non-detection of the obstacle approaching from ahead by said obstacle approach detecting means (45, 70).

5. A steering apparatus according to any one of the Claims 1 to 4, further comprising predetermined operation detecting means (44) for detecting a predetermined operation taken by a driver during the operation of said steering wheel, wherein said predetermined conditions include detection of the predetermined operation by said predetermined operation detecting means (44).

6. A steering apparatus according to Claim 1, further comprising:

   a power assist device (10) for assisting a steering force exerted on said steering wheel (SW), and

   steering angle detecting means (43) for detecting a steering angle of said steering wheel (SW), wherein said control means (70) causes said steering reactive force imparting means (60) to impart a required steering reactive force to said steering wheel (SW) when it is detected from outputs of said obstacle detecting means (42) and said steering angle detecting means (43) that there is an obstacle in a predetermined region in the turning direction of said steering wheel (SW) and that the vehicle is steered to approach the obstacle, whereas the control means (70) directs said power assist device (10) to increase steering assist force more than normal when it is determined from the outputs from said obstacle detecting means (42) and said steering angle detecting means (43) that there is an obstacle in the predetermined region in the turning direction of said steering wheel (SW) and that the vehicle is steered to move away from the obstacle.

7. A steering apparatus according to any one of the Claims 1 to 5, further comprising a power assist device (10) for assisting a steering force exerted on said steering wheel (SW), wherein said steering reactive force imparting means (60) imparts the steering reactive force through said power assist device (10).

8. A steering apparatus according to Claim 7, wherein said power assist device includes a power cylinder comprising a pair of oil chambers (18a, 18b) partitioned by a piston for generating a proper steering assisting force corresponding to the turning direction of said steering wheel (SW) by the use of hydraulic pressures in the respective oil chambers (18a, 18b), and wherein said steering reactive force imparting means comprises oil amount restricting means (CV3, CV4, CV5, CV6, CV7) for restricting at least either an amount of an oil supply to said oil chambers (18a, 18b) capable of generating a force for assisting the steering operation or an amount of an oil discharge from said oil chambers (18a, 18b) capable of generating a force against the steering operation.

9. A steering apparatus according to Claim 6 or 7, wherein said power assist device (10) includes a power cylinder (18) comprising a pair of oil chambers (18a, 18b) partitioned by a piston (18c) for generating a proper steering assisting force corresponding to the turning direction of said steering wheel (SW) by the use of hydraulic pressures in the respective oil chambers (18a, 18b), and oil passages (182, 183) communicating with said respective oil chambers (18a, 18b), and wherein said steering reactive force imparting means comprises oil passage switching means (200) for switching between said oil passages (182, 183) to establish a steering reactive force imparting condition in which said oil chambers (18a, 18b) capable of generating a force against the steering operation is communicated with an oil passage adapted to supply oil from an oil source (T) while said other oil chamber is communicated with an oil passage adapted to return oil to said oil source (T).

10. A steering apparatus according to Claim 7, wherein said power assist device (100) is of an electric type which is adapted to detect a steering torque of said steering wheel (SW) and adjusting a torque of a steering assist motor (101) depending on said steering torque thus detected, and wherein said steering reactive force imparting means comprises brake torque applying means (101, 102) for applying a brake torque to a member (104) rotated in cooperation with said steering wheel (SW).

11. A steering apparatus according to Claim 10, wherein said brake torque applying means comprises said motor (101) which is stopped or is applied with a counter electromotive force.

12. A steering apparatus according to Claim 11, wherein said power assist device (100) includes a power clutch (103) for adjusting a transmission torque from said motor (101) to a driven member, and wherein said control means (70) causes said power clutch (103) to couple said motor (101) and said driven member with a predetermined coupling force thereby imparting a brake torque of said motor (101) as the steering reactive force.

13. A steering apparatus according to any one of the Claims 1 to 7, wherein said steering reactive force imparting means (60) comprises motion restricting means (60A, 51, 61, 409) for restricting motion of a power transmission mechanism for transmitting a power from said steering wheel (SW) to wheels.

14. A steering apparatus according to Claim 13, wherein said power transmission mechanism comprises a pinion (12a) which is rotatable in response to said steering wheel (SW) and a rack shaft (RS) to be axially driven by said pinion (12a), and wherein said motion restricting means comprises pressing means (51) for pressing said rack shaft (RS) to restrict an axial movement of said rack shaft (RS).

15. A steering apparatus according to Claim 13, wherein said power transmission mechanism comprises a pinion (12a) which is rotatable in response to said steering wheel (SW) and a rack shaft (RS) to be axially driven by said pinion (12a), and wherein said motion restricting means comprises pressing means (61) for pressing a rotary shaft (11) of said pinion (12a) to restrict a rotation of said rotary shaft (11).

16. A steering apparatus according to Claim 13, wherein said power transmission mechanism comprises a recirculating ball type steering gear mechanism (400) including a worm (402) formed on a peripheral surface of a steering shaft (401) and a nut (404) to be axially driven by said worm (402), and wherein said motion restricting means comprises pressing means (409) for pressing said steering shaft (401) to restrict a rotation of said steering shaft (401).

17. A steering apparatus according to Claim 13, wherein said power transmission mechanism comprises a recirculating ball type steering gear mechanism (400) including a worm (402) formed on a peripheral surface of a steering shaft (401) and a nut (404) to be axially driven by said worm (402), and wherein said motion restricting means comprises pressing means (409) for pressing said nut (404) to restrict an axial movement of said nut (404).

18. A steering apparatus according to Claim 13, wherein said power transmission mechanism comprises a recirculating ball type steering gear mechanism (400) including a worm (402) formed on a peripheral surface of a steering shaft (401), a nut (404) to be axially driven by said worm (402) and a shaft (406) to be rotated as driven by a rack (404a) formed on an outer peripheral surface of said nut (404), and wherein said motion restricting means comprises pressing means (409) for pressing said shaft (406) to restrict a rotation of said shaft (406).

**Patentansprüche**

1. Lenkvorrichtung zum Lenken eines Fahrzeugs mit einem Lenkrad (SW), die folgendes aufweist:

   Lenkkrafteinrichtungen (30, 60) zum Zuführen einer Lenkkraft an das Lenkrad (SW);

   eine Hindernis-Detektiereinrichtung (42) zum Detektieren eines Hindernisses um das Fahrzeug herum;

   eine Steuereinrichtung (70) zum Steuern der zuzuführenden Lenkkraft in Abhängigkeit von vorbestimmten Bedingungen;
   dadurch gekennzeichnet, daß
   die Lenkkrafteinrichtungen eine Einrichtung (60) zum Aufbringen einer Lenkgegenkraft aufweisen;
   wobei die Steuereinrichtung (70) ausgebildet ist, um zu bewirken, daß die Einrichtung (60) zum Aufbringen einer Gegenkraft eine Gegenkraft auf das Lenkrad gegen Einschlagen in eine vorbestimmte Richtung unter den vorbestimmten Bedingungen aufbringt, daß die Gegenwart eines Hindernisses um das Fahrzeug herum von der Hindernis-Detektiereinrichtung (42) detektiert wird.

2. Lenkvorrichtung nach Anspruch 1, die ferner folgendes aufweist:

   eine Lenkrichtungs-Detektiereinrichtung (43) zum Detektieren einer Einschlagrichtung des Lenkrads (SW),
wobei die vorbestimmten Bedingungen das Detektieren des Vorhandenseins eines Hindernisses in einem vorbestimmten Bereich in der Einschlagrichtung des Lenkrads (SW) auf der Basis von Ausgangssignalen der Hindernis-Detektiereinrichtung (42) und der Lenkrichtungs-Detektiereinrichtung (43) umfassen, wobei die vorbestimmte Einschlagrichtung des Lenkrads (SW) eine Richtung ist, in der das Hindernis vorhanden ist.

3. Lenkvorrichtung nach Anspruch 2, die ferner Fahrpositions-Detektiereinrichtungen (47, 48, 70) aufweisen, um eine Position des Fahrzeugs, das in einer Fahrspur (P) fährt, in bezug auf die Querrichtung des Fahrzeugs zu detektieren, wobei die Steuereinrichtung (70) ausgebildet ist, um einen Lenkwinkel-Einstellwert zu finden, der erforderlich ist, um ein Abweichen des Fahrzeugs von der Spur (P) auf der Basis der Querposition zu verhindern, und den Lenkgegenkraftwert in Abhängigkeit von dem so gefundenen Lenkwinkel-Einstellwert bestimmt.

4. Lenkvorrichtung nach einem der Ansprüche 1 bis 3, die ferner Hindernisnäherungs-Detektiereinrichtungen (45, 70) zum Detektieren eines sich von vorn nähernden Hindernisses aufweist, wobei die vorbestimmten Bedingungen das Nichtdetektieren des sich von vorn nähernden Hindernisses durch die Hindernisnäherungs-Detektiereinrichtungen (45, 70) umfassen.

5. Lenkvorrichtung nach einem der Ansprüche 1 bis 4, die ferner eine Detektiereinrichtung (44) zum Detektieren einer vorbestimmten Handlung aufweist, die von einem Fahrer während der Betätigung des Lenkrads vorgenommen wird, wobei die vorbestimmten Bedingungen das Detektieren der vorbestimmten Handlung durch die Detektiereinrichtung (44) für die vorbestimmte Handlung umfassen.

6. Lenkvorrichung nach Anspruch 1, die ferner folgendes aufweist:

eine Servoeinrichtung (10) zum Unterstützen einer auf das Lenkrad (SW) aufgebrachten Lenkkraft und

eine Lenkwinkel-Detektiereinrichtung (43) zum Detektieren eines Lenkwinkels des Lenkrads (SW), wobei die Steuereinrichtung (70) bewirkt, daß die Einrichtung (60) zum Aufbringen einer Lenkgegenkraft eine erforderliche Lenkgegenkraft auf das Lenkrad (SW) aufbringt, wenn aus Ausgangssignalen der Hindernis-Detektiereinrichtung (42) und der Lenkwinkel-Detektiereinrichtung (43) detektiert wird, daß es in einem vorbestimmten Bereich in der Einschlagrichtung des Lenkrads (SW) ein Hindernis gibt und daß das Fahrzeug so gelenkt wird, daß es sich dem Hindernis nähert, wohingegen die Steuereinrichtung (70) die Servoeinrichtung (10) anweist, die Lenkhilfskraft mehr als normal zu erhöhen, wenn aus den Ausgangssignalen der Hindernis-Detektiereinrichtung (42) und der Lenkwinkel-Detektiereinrichtung (43) bestimmt wird, daß es ein Hindernis in dem vorbestimmten Bereich in der Einschlagrichtung des Lenkrads (SW) gibt und daß das Fahrzeug gelenkt wird, um sich von dem Hindernis weg zu bewegen.

7. Lenkvorrichtung nach einem der Ansprüche 1 bis 5, die ferner eine Servoeinrichtung (10) zum Unterstützen einer auf das Lenkrad (SW) aufgebrachten Lenkkraft aufweist, wobei die Einrichtung (60) zum Aufbringen einer Lenkgegenkraft die Lenkgegenkraft durch die Servoeinrichtung (10) aufbringt.

8. Lenkvorrichtung nach Anspruch 7, wobei die Servoeinrichtung einen Servozylinder aufweist, der ein Paar von Ölkammern (18a, 18b) aufweist, die durch einen Kolben abgeteilt sind, um durch die Verwendung hydraulischer Drücke in den jeweiligen Ölkammern (18a, 18b) eine angemessene Lenkhilfskraft zu erzeugen, die der Einschlagrichtung des Lenkrads (SW) entspricht, wobei die Einrichtung zum Aufbringen einer Lenkgegenkraft eine Ölmengen-Begrenzungseinrichtung (CV3, CV4, CV5, CV6, CF7) aufweist, um wenigstens entweder eine Ölzufuhrmenge zu den Ölkammern (18a, 18b), die imstande ist, eine Kraft zum Unterstützen des Lenkvorgangs zu erzeugen, oder eine Ölabgabemenge aus den Ölkammern (18a, 18b) zu begrenzen, die imstande ist, eine Kraft gegen den Lenkvorgang zu erzeugen.

9. Lenkvorrichtung nach Anspruch 6 oder 7, wobei die Servoeinrichtung (10) einen Servozylinder (18) umfaßt, der folgendes aufweist: ein Paar von Ölkammern (18a, 18b), die durch einen Kolben (18c) abgeteilt sind, um durch die Verwendung von hydraulischen Drücken in den jeweiligen Ölkammern (18a, 18b) eine angemessene Lenkhilfskraft zu erzeugen, die der Einschlagrichtung des Lenkrads (SW) entspricht, und Ölkanäle (182, 183), die mit den jeweiligen Ölkammern (18a, 18b) in Verbindung stehen, und wobei die Einrichtung zum Aufbringen einer Lenkgegenkraft eine Ölkanal-Umschalteinrichtung (200) aufweist, um zwischen den Ölkanälen (182, 183) umzuschalten, um einen Lenkgegenkraftaufbringzustand herzustellen, in dem eine der Ölkammern (18a, 18b), die imstande ist, eine Kraft gegen den Lenkvorgang zu erzeugen, mit einem Ölkanal verbunden wird, der ausgebildet ist, um Öl aus einen Ölvorrat (T) zuzuführen, während die andere Ölkammer mit einem Ölkanal verbunden wird, der ausgebildet ist, um Öl zu dem Ölvorrat (T) rückzuführen.

10. Lenkvorrichtung nach Anspruch 7, wobei die Servoeinrichtung (100) von einem elektrischen Typ ist, der ausgebildet ist, um ein Lenkdrehmoment des Lenkrads (SW) zu detektieren und ein Drehmoment eines Servolenkmotors (101) in Abhängigkeit von dem so detektierten Lenkdrehmoment einzustellen, und
wobei die Einrichtung zum Aufbringen einer Lenkgegenkraft eine Bremsdrehmoment-Aufbringeinrichtung (101, 102) aufweist, um auf ein Element (104), das im Zusammenwirken mit dem Lenkrad (SW) gedreht wird, ein Bremsdrehmoment aufzubringen.

11. Lenkvorrichtung nach Anspruch 10, wobei die Bremsdrehmoment-Aufbringeinrichtung den Motor (101) aufweist, der angehalten wird oder auf den eine Gegen-EMK aufgebracht wird.

12. Lenkvorrichtung nach Anspruch 11, wobei die Servoeinrichtung (100) eine Magnetpulverkupplung (103) zum Einstellen eines Kraftübertragungs-Drehmoments von dem Motor (101) auf ein angetriebenes Element aufweist, und
wobei die Steuereinrichtung (70) bewirkt, daß die Magnetpulverkupplung (103) den Motor (101) und das angetriebene Element mit einer vorbestimmten Kuppelkraft kuppelt, so daß ein Bremsdrehmoment des Motors (101) als die Lenkgegenkraft aufgebracht wird.

13. Lenkvorrichtung nach einem der Ansprüche 1 bis 7, wobei die Einrichtung (60) zum Aufbringen einer Lenkgegenkraft eine Bewegungsbegrenzungseinrichtung (60A, 51, 61, 409) aufweist, um eine Bewegung eines Kraftübertragungsmechanismus zum Übertragen einer Kraft von dem Lenkrad (SW) auf Räder zu begrenzen.

14. Lenkvorrichtung nach Anspruch 13, wobei der Kraftübertragungsmechanismus aufweist: ein Ritzel (12a), das in Abhängigkeit von dem Lenkrad (SW) drehbar ist, und eine Zahnstange (RS), um von dem Ritzel (12a) in Axialrichtung getrieben zu werden,
wobei die Bewegungsbegrenzungseinrichtung eine Druckaufbringeinrichtung (51) zum Aufbringen von Druck auf der Zahnstange (RS) aufweist, um eine Axialbewegung der Zahnstange (RS) zu begrenzen.

15. Lenkvorrichtung nach Anspruch 13, wobei der Kraftübertragungsmechanismus aufweist: ein Ritzel (12a), das in Abhängigkeit von dem Lenkrad (SW) drehbar ist, und eine Zahnstange (RS), um von dem Ritzel (12a) in Axialrichtung getrieben zu werden, und
wobei die Bewegungsbegrenzungseinrichtung eine Druckaufbringeinrichtung (61) zum Aufbringen von Druck auf eine Drehwelle (11) des Ritzels (12a) aufweist, um eine Drehung der Drehwelle (11) zu begrenzen.

16. Lenkvorrichtung nach Anspruch 13, wobei der Kraftübertragungsmechanismus aufweist: einen Lenkgetriebemechanismus (400) vom Kugelumlauflenkungstyp, der eine Schnecke (402), die an einer Umfangsoberfläche einer Lenkwelle (401) ausgebildet ist, und eine Mutter (404) aufweist, die von der Schnecke (402) in Axialrichtung zu treiben ist, und
wobei die Bewegungsbegrenzungseinrichtung eine Druckaufbringeinrichtung (409) zum Aufbringen von Druck auf die Lenkwelle (401) aufweist, um eine Drehung der Lenkwelle (401) zu begrenzen.

17. Lenkvorrichtung nach Anspruch 13, wobei der Kraftübertragungsmechanismus aufweist: einen Lenkgetriebemechanismus (400) vom Kugelumlauflenkungstyp, der eine Schnecke (402), die an einer Umfangsoberfläche einer Lenkwelle (401) ausgebildet ist, und eine Mutter (404) umfaßt, die von der Schnecke (402) in Axialrichtung zu treiben ist,
wobei die Bewegungsbegrenzungseinrichtung eine Druckaufbringeinrichtung (409) zum Aufbringen von Druck auf die Mutter (404) umfaßt, um eine Axialbewegung der Mutter (404) zu begrenzen.

18. Lenkvorrichtung nach Anspruch 13, wobei der Kraftübertragungsmechanismus einen Lenkgetriebemechanismus (400) vom Kugelumlauflenkungstyp aufweist, der folgendes umfaßt: eine Schnecke (402), die an einer Umfangsoberfläche einer Lenkwelle (401) ausgebildet ist, eine Mutter (404), die von der Schnecke (402) in Axialrichtung zu treiben ist, und eine Welle (406), um gedreht zu werden, während sie von einer Zahnstange (404a), die an einer äußeren Umfangsoberfläche der Mutter (404) ausgebildet ist, getrieben wird, und
wobei die Bewegungsbegrenzungseinrichtung eine Druckaufbringeinrichtung (409) zum Aufbringen von Druck auf die Welle (406) aufweist, um eine Drehung der Welle (406) zu begrenzen.

## Revendications

1. Dispositif de direction pour diriger un véhicule avec un volant de direction (SW), comprenant :

   des moyens de force de direction (30,60) pour appliquer une force de direction au dit volant de direction (SW) ;
   des moyens de détection d'obstacle (42) pour détecter un obstacle autour du véhicule ;
   des moyens de contrôle (70) pour contrôler la force de direction à appliquer en réponse à des conditions prédéterminées ;
   caractérisé en ce que
   lesdits moyens de force de direction comprennent des moyens d'application de force de contre-réaction de direction (60) ;
   lesdits moyens de contrôle (70) étant adaptés pour faire que lesdits moyens d'application de force de contre-réaction (60) appliquent une force de contre-réaction au volant de direction à l'encontre d'une rotation dans une direction prédéterminée sous les conditions prédéterminées que la présence d'un obstacle est détectée autour du véhicule par lesdits moyens de détection d'obstacle (42).

2. Dispositif de direction selon la revendication 1, comprenant en outre :

   des moyens de détection de l'orientation de direction (43) pour détecter la direction de rotation dudit volant de direction (SW),
   caractérisé en ce que lesdites conditions prédéterminées incluent la détection de l'existence de l'obstacle dans une région prédéterminée dans la direction de rotation dudit volant de direction (SW) sur la base de la sortie de ces moyens de détection d'obstacle (42) et de ces moyens de détection de l'orientation de la direction (43), cette direction de rotation prédéterminée dudit volant de direction (SW) étant une direction dans laquelle existe un obstacle.

3. Dispositif de direction selon la revendication 2, comprenant de plus des moyens de détection de la position de déplacement (47,48,70) pour détecter la position du véhicule se déplaçant dans une voie de route (P) par rapport au sens transversal du véhicule, caractérisé en ce que :
   lesdits moyens de contrôle (70) sont adaptés pour établir une valeur d'ajustement d'angle de direction requise pour empêcher le véhicule de dévier de la voie (P) sur la base de cette position transversale et de déterminer la quantité de force de contre-réaction de direction dépendante de cette valeur d'ajustement d'angle de direction ainsi établi.

4. Dispositif de direction selon l'une des revendications 1 à 3, comprenant de plus des moyens de détection de l'approche d'un obstacle (45,70) pour détecter un obstacle s'approchant de devant,
   caractérisé en ce que les conditions prédéterminées incluent une non-détection d'un obstacle s'approchant de devant par ces moyens de détection d'approche d'obstacle (45,70).

5. Dispositif de direction selon l'une des revendications 1 à 4, comprenant de plus des moyens de détection d'opération prédéterminée (44) pour détecter une opération prédéterminée prise par un conducteur pendant l'opération de ce volant de direction,
   caractérisé en ce que ces conditions prédéterminées incluent la détection de l'opération prédéterminée par ces moyens de détection d'opération prédéterminée (44).

6. Dispositif de direction selon la revendication 1, comprenant de plus :

   un dispositif d'assistance de puissance (10) pour assister une force de direction exercée sur ledit volant de direction (SW), et
   les moyens de détection d'angle de direction (43) pour détecter un angle de direction dudit volant de direction (SW),
   caractérisé en ce que lesdits moyens de contrôle (70) font que les moyens d'application de force de contre-réaction de direction (60) appliquent une force requise de contre-réaction de direction au dit volant de direction (SW) lorsqu'il est détecté à partir de la sortie dudit moyen de détection d'obstacle (42) et dudit moyen de détection d'angle de direction (43) qu'il existe un obstacle dans la région prédéterminée dans la direction de rotation dudit volant de direction (SW) et que le véhicule est dirigé pour s'approcher de l'obstacle ; dans lequel ces moyens de contrôle (70) commandent à ce dispositif d'assistance de puissance (10) d'augmenter la force d'assistance de direction plus que normale lorsqu'il est déterminé à partir de la sortie de ces moyens de détection d'obstacle (42) et de ces moyens de détection d'angle de direction (43) qu'il existe un obstacle dans la région prédéterminée dans la direction de rotation dudit volant de direction (SW) et que le véhicule est dirigé pour s'éloigner de cet obstacle.

7. Dispositif de direction selon l'une des revendications 1 à 5, comprenant de plus un dispositif d'assistance de puissance (10) pour assister la force de direction exercée sur ledit volant de direction (SW),

caractérisé en ce que lesdits moyens d'application de force de contre-réaction de direction (60) appliquent une force de contre-réaction de direction au travers de ce dispositif d'assistance de puissance (10).

8. Dispositif de direction selon la revendication 7, caractérisé en ce que ce dispositif d'assistance de puissance comprend un cylindre de puissance comportant une paire de chambres d'huile (18a,18b) séparées par un piston pour générer une force adaptée d'assistance de direction correspondant à la direction de rotation dudit volant de direction (SW) par utilisation de pression hydraulique dans les chambres d'huile respectives (18a,18b), et en ce que lesdits moyens d'application de force de contre-réaction de direction comprennent des moyens de restriction de quantité d'huile (CV3,CV4,CV5,CV6,CV7) pour restreindre au moins soit une quantité d'huile appliquée aux dites chambres d'huile (18a,18b) aptes à générer une force pour assister l'opération de direction, soit restreindre une quantité d'huile évacuée desdites chambres d'huile (18a,18b) aptes à générer une force contre l'opération de direction.

9. Dispositif de direction selon la revendication 6 ou 7, caractérisé en ce que ledit dispositif d'assistance de puissance (10) comprend un cylindre de puissance (18) comportant une paire de chambres d'huile (18a,18b) séparées par un piston (18c) pour générer une force adaptée d'assistance de direction correspondant à la direction de rotation dudit volant de rotation (SW) par utilisation de pression hydraulique dans les chambres d'huile respectives (18a,18b) et des passages d'huile (182,183) communiquant avec les chambres d'huile (18a,18b) respectives et, en ce que les moyens d'application de force de contre-réaction de direction comprennent des moyens de basculement (200) pour basculer entre ces passages d'huile (182,183) pour établir des conditions d'application de force de contre-réaction de direction dans lesquelles une des dites chambres d'huile (18a,18b) aptes á générer une force à l'encontre de l'opération de direction est mise en communication avec un passage d'huile adapté pour alimenter de l'huile d'une source d'huile (T) alors que l'autre chambre d'huile est mise en communication avec un passage d'huile adapté à retourner l'huile dans ladite source d'huile (T).

10. Dispositif de direction selon la revendication 7, caractérisé en ce que ce dispositif d'assistance de puissance (100) est de type électrique qui est adapté à détecter un couple de direction dudit volant de direction (SW) et d'ajuster un couple d'un moteur d'assistance de direction (101) dépendant dudit couple de direction ainsi détecté, et en ce que lesdits moyens d'application d'une force de contre-réaction de direction comprennent des moyens d'application d'un couple de freinage (101,102) pour appliquer un couple de freinage à un organe (104) tourné en coopération avec ledit volant de direction (SW).

11. Dispositif de direction selon la revendication 10, caractérisé en ce que ces moyens d'application de couple de freinage comprennent ce moteur (101) qui est arrêté ou auquel est appliquée une force électromotrice contraire.

12. Dispositif de direction selon la revendication 11, caractérisé en ce que le dispositif d'assistance de puissance (100) comprend un embrayage de poudre (103) pour ajuster la transmission de couple dudit moteur (101) à un organe emmené, et en ce que lesdits moyens de contrôle (70) font que cet embrayage de poudre (103) accouple ledit moteur (101) et ledit organe emmené avec une force de couplage prédéterminée appliquant ainsi un couple de freinage au dit moteur (101) en tant que force de contre-réaction de direction.

13. Dispositif de direction selon l'une des revendications 1 à 7, caractérisé en ce que les moyens d'application de force de contre-réaction de direction (60) comprennent des moyens de restriction de mouvement (60A,51,61,409) pour restreindre le mouvement d'un mécanisme de transmission de puissance prévu pour transmettre de la puissance dudit volant de direction (SW) aux roues.

14. Dispositif de direction selon la revendication 13, caractérisé en ce que ce mécanisme de transmission de puissance comprend un pignon (12a) susceptible d'être tourné en réponse au dit volant de direction (SW) et une crémaillère (RS) entraînée axialement par ledit pignon (12a), et en ce que les moyens de restriction de mouvement comprennent des moyens de pression (51) pour presser contre la crémaillère (RS) pour restreindre un mouvement axial de ladite crémaillère (RS).

15. Dispositif de direction selon la revendication 13, caractérisé en ce que le mécanisme de transmission de puissance comprend un pignon (12a) pouvant être mis en rotation en réponse au dit volant de direction (SW) et une crémaillère (RS) entraînée axialement par ledit pignon (12a), et en ce que les moyens de restriction de mouvement comprennent des moyens de pression (61) pour prendre appui sur un arbre de rotation (11) du type pignon (12a) pour restreindre une rotation dudit arbre rotatif (11).

16. Dispositif de direction selon la revendication 13, caractérisé en ce que le mécanisme de transmission de puissance comprend un mécanisme d'engrenage de direction de type à billes recirculées (400) incluant une vis sans fin (402) formée sur la surface périphérique de la colonne de direction (401) et un écrou (404) prévu pour être entraîné axialement par cette vis sans fin (402), et

en ce que les moyens de restriction de mouvement comprennent des moyens de pression (409) pour appuyer sur la colonne de direction (401) pour restreindre la rotation dudit arbre de direction (401).

17. Dispositif de direction selon la revendication 13, caractérisé en ce que le mécanisme de transmission de puissance comprend un mécanisme d'engrenage de direction de type à billes recirculées (400) incluant une vis sans fin (402) formée sur la surface périphérique de la colonne de direction (401) et un écrou (404) prévu pour être entraîné axialement par ladite vis sans fin (402), et

en ce que les moyens de restriction de mouvement comprennent des moyens de pression (409) pour presser contre cet écrou (404) pour restreindre un mouvement axial dudit écrou (404).

18. Dispositif de direction selon la revendication 13, caractérisé en ce que le mécanisme de transmission de puissance comprend un mécanisme d'engrenage de direction de type à billes recirculées (400) incluant une vis sans fin (402) formée sur la surface périphérique de la colonne de direction (401), un écrou (404) prévu pour être entraîné axialement par ladite vis sans fin (402) et un axe (406) prévu pour tourner en étant entraîné par une crémaillère (404a) formée sur la surface périphérique externe dudit écrou (404) et,

en ce que les moyens de restriction de mouvement comprennent des moyens de pression (409) pour presser sur cet axe (406) pour restreindre la rotation dudit arbre (406).

F I G. 1

# F I G. 2

F I G. 3

F I G. 4

EP 0 654 392 B1

F I G. 5

START

S1 — INDICATER OPERATED ?  → NO

YES

S2 — DETECT TURNING DIRECTION OF STEERING WHEEL

S3 — INPUT SIGNAL FROM LATERALLY BACKWARD OBSTACLE SENSOR

S4 — DOES OBSTACLE EXIST WITHIN PREDETERMINED REGION LATERALLY BACKWARD OF STEERING DIRECTION ?  → NO

YES

S5 — IMPART STEERING REACTIVE FORCE

S6 — IS STEERING REACTIVE FORCE BEING IMPARTED ?  → NO

YES

S7 — CANCEL STEERING REACTIVE FORCE

FIG. 6

- 41 SPEED SENSOR
- 42 LATERALLY BACKWARD OBSTACLE SENSOR
- 45 FORWARD OBSTACLE SENSOR
- 43 STEERING ANGLE SENSOR
- 44 INDICATER OPERATION SENSOR
- 70 CONTROL SECTION
- CV1
- CV2

# F I G. 7

```
                    START

S1        INDICATER              NO
          OPERATED
             ?
            YES

S2   DETECT TURNING DIRECTION
        OF STEERING WHEEL

S3   INPUT SIGNAL FROM LATERALLY
     BACKWARD OBSTACLE SENSOR

              DOES
S4      OBSTACLE EXIST WITHIN          NO
     PREDETERMINED REGION LATERALLY
         BACKWARD OF STEERING
            DIRECTION
               ?
              YES

S5   INPUT SIGNAL FROM FORWARD
         OBSTACLE SENSOR

S6       IS OBSTACLE             YES
      APPROACHING FROM·
           AHEAD?
              NO                               S8
                                          IS STEERING          NO
S7   IMPART STEERING          REACTIVE FORCE BEING
     REACTIVE FORCE                IMPARTED?
                                        YES

                                   S9   CANCEL STEERING
                                        REACTIVE FORCE
```

FIG. 8

F I G. 9

F I G. 10

EP 0 654 392 B1

FIG. 11

# FIG. 12

EP 0 654 392 B1

| | |
|---|---|
| SPEED SENSOR | 41 |
| LATERALLY BACKWARD OBSTACLE SENSOR | 42 |
| STEERING ANGLE SENSOR | 43 |
| INDICATER OPERATION SENSOR | 44 |

CONTROL SECTION

F I G. 13

# F I G. 14

SPEED SENSOR — 41

LATERALLY BACKWARD OBSTACLE SENSOR — 42

STEERING ANGLE SENSOR — 43

INDICATER OPERATION SENSOR — 44

CONTROL SECTION

EP 0 654 392 B1

FIG. 15

F I G. 16

START

S1 INDICATER OPERATED ? — NO

YES

S2 DETECT TURNING DIRECTION OF STEERING WHEEL

S3 INPUT SIGNAL FROM LATERALLY BACKWARD OBSTACLE SENSOR

S4 DOES OBSTACLE EXIST WITHIN PREDETERMINED REGION LATERALLY BACKWARD OF STEERING DIRECTION ? — NO

YES

S5 STEERING ANGLE TOWARD STEERING DIRECTION INCREASING ? — NO

S6 SWITCH OIL PASSAGES — YES

S7 INCREASE SUPPLY OF PRESSURE OIL

S8 DETECT STEERING ANGLE

S9 IS DETECTED ANGLE SAME AS THAT BEFORE STEERING WHEEL IS TURNED ?  NO / YES

S10 IS STEERING REACTIVE FORCE BEING IMPARTED? — NO / YES

S11 CANCEL STEERING REACTIVE FORCE

F I G. 17

CONTROL SECTION

F I G. 18

F I G. 19

F I G. 20

# F I G. 21

SPEED SENSOR — 41

LATERALLY BACKWARD OBSTACLE SENSOR — 42

STEERING ANGLE SENSOR — 43

TORQUE SENSOR — 46

INDICATER OPERATION SENSOR — 44

FEEDER CIRCUIT 90b

FEEDER CIRCUIT 90a

CONTROL SECTION 70

A

105

106

102b

102

102a

101

103b  103a

100

104  103

EP 0 654 392 B1

F I G. 22

SPEED SENSOR — 41

LATERALLY BACKWARD OBSTACLE SENSOR — 42

STEERING ANGLE SENSOR — 43

INDICATER OPERATION SENSOR — 44

TORQUE SENSOR — 46

SIGNAL PROCESSING UNIT — 48

CAMERA — 47

CONTROL SECTION — 70

FEEDER CIRCUIT — 90b

FEEDER CIRCUIT — 90a

F I G. 23

# F I G. 24

START

S1 — INDICATER OPERATED ? — NO

YES

S2 — DETECT TURNING DIRECTION OF STEERING WHEEL

S3 — INPUT SIGNAL FROM LATERALLY BACKWARD OBSTACLE SENSOR

S4 — DOES OBSTACLE EXIST WITHIN PREDETERMINED REGION LATERALLY BACKWARD OF STEERING DIRECTION ? — NO

YES

S5 — DETECT POSITION OF VEHICLE

S6 — IS VEHICLE BIASED TO STEERING DIRECTION MORE THAN PREDETERMINED AMOUNT? — NO

YES

S7 — IMPART STEERING REACTIVE FORCE

S8 — IS STEERING REACTIVE FORCE BEING IMPARTED? — NO

YES

S9 — CANCEL STEERING REACTIVE FORCE

FIG. 25

START

S1 — INDICATER OPERATED ? — NO

YES

S2 | DETECT TURNING DIRECTION OF STEERING WHEEL

S3 | INPUT SIGNAL FROM LATERALLY BACKWARD OBSTACLE SENSOR

S4 — DOES OBSTACLE EXIST WITHIN PREDETERMINED REGION LATERALLY BACKWARD OF STEERING DIRECTION ? — NO

YES

S5 | DETECT POSITION OF VEHICLE

S6 — IS VEHICLE BIASED TO STEERING DIRECTION MORE THAN PREDETERMINED AMOUNT? — NO

YES

S7 | INPUT IMAGE DATA

S8 — IS OBSTACLE APPROACHING FROM AHEAD? — YES

NO

S9 | IMPART STEERING REACTIVE FORCE

S10 — IS STEERING REACTIVE FORCE BEING IMPARTED? — NO

YES

S11 | CANCEL STEERING REACTIVE FORCE